# EUROPEAN PATENT SPECIFICATION

(11) **EP 3 492 817 B1**
(45) Date of publication and mention of the grant of the patent: **12.08.2020**
(21) Application number: 18210098.2
(22) Date of filing: 04.12.2018
(51) Int. Cl.: F24C 3/12, F24C 7/08, G05G 5/05, G05G 1/08

(54) **COOKING DEVICE**
KOCHVORRICHTUNG
DISPOSITIF DE CUISSON

(30) Priority: 04.12.2017 US 201762594230 P; 03.12.2018 KR 20180154010
(43) Date of publication of application: 05.06.2019
(73) Proprietor: LG Electronics Inc., Yeongdeungpo-Gu Seoul 07336 (KR)
(72) Inventor: HA, Yeonsik, 08592 Seoul (KR); YU, Cheong Hwan, 08592 Seoul (KR); LEE, Jeongdong, 08592 Seoul (KR)
(74) Representative: Vossius & Partner Patentanwälte Rechtsanwälte mbB

(56) References cited:
- EP-A2- 3 232 294
- WO-A1-2004/034371
- US-A- 2 810 525
- US-A1- 2009 139 367
- US-A1- 2012 204 854

## Description

### BACKGROUND

### 1. Field of the Disclosure

The present disclosure relates to a cooking device which allows a user to set a cooking temperature and a cooking time quickly and easily.

### 2. Discussion of Related Art

Cooking devices are one of home appliances for cooking food and may be classified into various types of cooking device according to a heating source to be used, a type of cooking method, a type of fuel, or the like.

Cooking devices may be classified into an open-type and a sealed-type depending on a shape of a space where foods are placed.

Sealed-type cooking devices are types of the cooking device which shields a space where food is placed and heats the shielded space to cook the food. The sealed-type cooking devices include an oven, a microwave oven, and the like.

Open-type cooking devices are types of the cooking device which cooks food by heating a container containing food or food placed in an open space. The open-type cooking devices include a gas stove, an induction range, and the like.

In recent years, combination type cooking devices having both the sealed-type cooking device and the open-type cooking device and capable of cooking food in various ways are used. In the combination type cooking device, the open-type cooking device is mainly disposed on an upper portion thereof, and the sealed-type cooking device is mainly disposed on a lower portion thereof. The combination type cooking device may include a plurality of open-type cooking devices of different types and sealed-type cooking devices of different types. Thus, a user may cook food using the combination type cooking device at the same time in different ways.

The user needs to adjust an amount of heat energy supplied by a heating source provided in the cooking device in order to use the cooking device. The amount of the heat energy supplied by the heating source of the cooking device may be displayed as a cooking temperature and a heating power level depending on the type of the cooking device. That is, the user may adjust the amount of the heat energy supplied to the food or containers by adjusting the cooking temperature and the heating power level displayed on the cooking device. Further, the user may set a time at which the food is cooked, i.e., the cooking time in addition to the adjustment of the amount of the heat energy

An operation method for adjusting the amount of the heat energy and the cooking time for the cooking differs according to the type of the cooking device. Korean Patent Publication No. 10-2011-0079007 discloses a structure and an operation method of a combination cooking device according to the related art. Further related prior art may be found in WO 2004/034371 A1, US 2012/204854 A1, US 2 810 525 A, US 2009/139367 A1, and EP 3 232 294 A2.

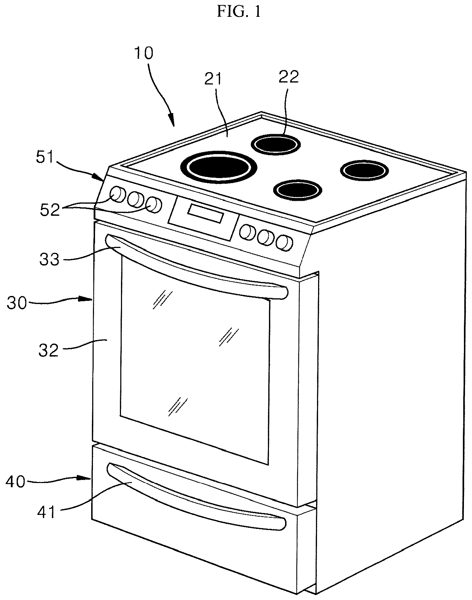

FIG. 1 illustrates a structure of a combination cooking device according to the related art.

Referring to FIG. 1, a combination cooking device 10 according to the related art includes a cooktop unit 21 configured to heat food or a container containing the food placed thereon to cook the food, an oven unit 30 configured to heat an inner space thereof in which the food or the container containing the food is placed to cook the food, a drawer unit 40 configured to store the food placed in an inner space thereof in a warm state or worm up the food, and a control unit 51 configured to control the cooktop unit 21, the oven unit 30, the drawer unit 40.

The cooktop unit 21 includes a plurality of cooktop heaters 22 which provide heat energy to heat the food or the container. The oven unit 30 includes a cooking chamber (not shown), which is the inner space of the oven unit 30 in which the food or the container containing the food is placed, and a door 32 configured to open and close the cooking chamber. The door 32 is provided with a handle 33 for gripping when the user opens or closes the door 32. Further, the drawer unit 40 includes a handle 41 for gripping when the user moves the drawer unit 40 forward or backward.

A control panel 51 is disposed on a front surface of the cooktop unit 21, i.e., above the door 32. The control panel 51 is formed in a hexahedral shape having a certain inner space. A knob-type input unit 52 is provided on a front surface of the control panel 51 for the user to input operational signals for operating the cooktop unit 21, the oven unit 30, and the drawer unit 40.

As shown in FIG. 1, conventionally, an amount of heat energy supplied by a heating source provided in the cooking device or a cooking time is adjusted mainly by rotating the knob-type input unit 52.

However, according to the related art, since the user has to adjust the amount of the heat energy or the cooking time depending on only scales marked on the knob-type input unit, the user may not accurately and precisely adjust the amount of the heat energy or the cooking time.

Further, according to the related art, it is difficult for the user to easily and accurately grasp the amount of the heat energy supplied by the cooking device and the remaining cooking time in the cooking process.

### SUMMARY OF THE DISCLOSURE

The present disclosure is directed to providing a cooking device which enables a user to easily and quickly adjust a level of heat energy supplied by the cooking device and the cooking time of the food.

The present disclosure is also directed to providing a cooking device capable of easily and quickly recognizing a variety of information such as a level of heat energy supplied by a heating module, a remaining cooking time, an operation mode of the heating module, or an operation status of the heating module

The present disclosure is also directed to providing a cooking device having a control means for allowing the user to control the cooking process more conveniently and accurately and to promptly check the information required for cooking.

The present disclosure is also directed to providing a cooking device which does not require replacement of the control means even if the heating module is replaced, by providing a single type of control means capable of controlling different type of heating modules.

The present disclosure is also directed to providing a cooking device having a simple and unified design by providing a single type of control means that is arranged independent of the heating module and can control different type of heating modules.

Aspects of the present disclosure are not limited to the above-described aspects, and other aspects and advantages of the present disclosure will be understood by the following description and will be more definitely understood through the embodiments of the present disclosure. Also, it will be easily appreciated that the aspects and advantages of the present disclosure may be implemented by means shown in the claims and a combination thereof.

A cooking device according to the present disclosure includes a new type of a control device configured to control cooking processes using the cooking device. The new type of control device, i.e., a knob module, includes a knob which operates in a push-and-turn manner and a knob ring which is coupled to the knob and operates in a click or hold manner, and a display unit formed integrally with the knob ring and capable of displaying a temperature, a heating power level, a time, or other information set according to an operation of the knob or the knob ring.

A user accurately and conveniently sets an amount of heat energy supplied by various heating sources included in the cooking device, that is, a heating module, or an operation time of the heating module, that is, a cooking time, using the knob module provided in the cooking device according to the present disclosure.

According to the invention, when the user intends to set a cooking temperature of the heating module provided in the cooking device using the knob module, the user first sets a default value by rotating the knob in a first direction or a second direction. Here, the default value is assigned to correspond to each rotational position of the knob and refers to a plurality of values (for example, 180°F, 175°F, 170°F,..., or 30 minutes, 60 minutes, 90 minutes,...) which are set to have preset intervals.

Once the default temperature is set, the user then more precisely adjusts the previously set default temperature by moving the knob ring provided on the knob module. Whenever the knob ring is moved, the previously set default temperature is increased or decreased by a preset adjustment unit (for example, 1°F).

In the same manner, the user operates the knob and knob ring provided on the knob module to precisely set a desired cooking time.

The knob ring according to the present disclosure has a structure of returning to its initial position after moving within a predetermined angle in the first or second direction. In the present disclosure, an operation of the knob ring is classified into a click operation or a holding operation according to a time for which a state in which the knob ring is moved in the first or second direction is maintained.

In the present disclosure, an operation, in which the knob ring returns to its initial position before a preset reference time (for example, 2 seconds) passes after the user moves the knob ring in any direction within the predetermined angle, is defined as the click operation of the knob ring. An operation, in which a state in which the knob ring is moved is maintained over the preset reference time (for example, 2 seconds) after the user moves the knob ring in any direction within the predetermined angle, is defined as the holding operation of the knob ring.

In this manner, in the present disclosure, it is possible to easily and precisely set the amount of the heat energy supplied by the heating module provided in the cooking device and the cooking time using the knob which operates in a push-and-turn manner and the knob ring which operates in a click or hold manner.

Values (for example, cooking temperature) set by the user using the knob module is immediately displayed on the display unit formed integrally with the knob ring whenever the user operates the knob or knob ring. In the process of cooking the food using the cooking device, various information such as the cooking temperature and the heating power level of the heating module set by the user, a remaining cooking time, whether the cooking is completed, and an operation mode are displayed on the display unit.

Thus, the user may more easily and accurately set the amount of the heat energy supplied by the heating module and the cooking time on the basis of information displayed on the display unit. Further, various information related to the cooking may be quickly and conveniently confirmed through the display unit even in the process of cooking.

Since the cooking device according to the present disclosure includes a plurality of different heating modules, various information regarding each heating module must be provided to the user during the cooking process. In the case of displaying such various information through a single display disposed at a position different from the control means of each heating module, the user has to check the display every time the control operation for each heating module is performed. This inconvenience increases as the size of the cooking device increases or as the type of the heating module increases.

Also, if information regarding a plurality of heating modules is displayed on a single display, the screen configuration of the display becomes complicated and it is difficult for the user to check desired information.

However, according to the present disclosure, each of the knob modules for controlling the respective heating modules includes a display unit, and information about corresponding heating modules is displayed on each of the display units simultaneously with the operation of the knob module. Therefore, the user can quickly and intuitively check information about each heating module whenever performing a control operation for each heating module.

Particularly, the display unit of the knob module according to the present disclosure is integrally formed with the knob ring. Information that is set or changed each time the user rotates the knob or moves the knob ring by touching the body (e.g., a finger) to the knob ring or the display unit is immediately displayed on the display unit. Thus, user's convenience is improved and information can be checked easily.

The display unit of the knob module according to the present disclosure is integrally formed with the knob ring in a protruding form on the knob ring surface. Due to such a structure, when the user operates the knob or the knob ring, the display unit is not blocked by the user's body (e.g., a hand), so that the visibility of the information displayed on the display unit is very high.

Also, according to the present disclosure, the heating operation for different types of heating modules can be controlled using the single type of knob module. According to the present disclosure, different knob modules corresponding to different types of heating modules are arranged on a single control panel. Thus, a simple and unified design for different types of heating modules is possible. As a result, the aesthetics of the product can be enhanced.

Also, according to the present disclosure, even if the type of the heating module included in the cooking device is changed, a single type of knob module can be applied. Further, the control panel in which the knob module is disposed in the cooking device is formed separately from the heating module. Thus, it is possible to produce various types of cooking devices having various combinations of heating modules by simply replacing the heating modules without replacing the knob modules. Accordingly, the manufacturing process can be simplified while lowering the designing difficulty and cost required for producing various types of cooking devices.

For example, if a new model of a cooking device including only a low-temperature heating module and a gas heating module is to be produced based on a model of a cooking device including a low-temperature heating module, a gas heating module, and an induction heating module, At the same time, the design and production of the new model can be easily completed simply by connecting the existing knob module to the newly placed heating module.

The cooking device according to the present disclosure has an advantage that the user can easily and quickly adjust the size of the heat energy supplied through the cooking device and the cooking time of the food.

Further, according to the present disclosure, the user may easily and quickly check various information such as a level of heat energy supplied by a heating module, a remaining cooking time, an operation mode of the heating module, or an operation status of the heating module.

Further, the cooking device according to the present disclosure has an advantage that the user can more conveniently and accurately control the cooking process and promptly check the information required for cooking.

Further, the cooking device according to the present disclosure includes a single type of control means capable of controlling different heating modules. Therefore, even if the heating module constituting the cooking appliance is replaced, it is not necessary to replace the control means.

Also, the cooking device according to the present disclosure has a simple and unified design by providing a single type of control means that is independent of the heating module and can control different types of heating modules.

### BRIEF DESCRIPTION OF THE DRAWINGS

The above and other objects, features, and advantages of the present disclosure will become more apparent to those of ordinary skill in the art by describing in detail exemplary embodiments thereof with reference to the accompanying drawings, in which:
FIG. 1 illustrates a structure of a combination cooking device according to the related art;
FIG. 2 is a perspective view of a cooking device according to one embodiment of the present disclosure;
FIG. 3 illustrates a configuration of an induction heating module included in the cooking device according to one embodiment of the present disclosure;
FIG. 4 illustrates an initialized state of a knob module included in the cooking device according to one embodiment of the present disclosure;
FIG. 5 illustrates a state in which a knob of the knob module according to one embodiment of the present disclosure is pushed;
FIG. 6 illustrates a state in which the knob of the knob module according to one embodiment of the present disclosure is rotated;
FIG. 7 illustrates a state in which a knob ring of the knob module according to one embodiment of the present disclosure is moved in a first direction;
FIG. 8 illustrates a state in which the knob ring of the knob module according to one embodiment of the present disclosure is moved in a second direction;
FIG. 9 is an exploded view of the knob module according to one embodiment of the present disclosure;
FIG. 10 is a perspective view of a heating power adjustment unit according to another embodiment of the present disclosure;
FIG. 11 is an exploded view of the heating power adjustment unit according to another embodiment of the present disclosure;
FIGS. 12 and 13 are cross-sectional views illustrating an operation of the heating power adjustment unit according to another embodiment of the present disclosure;
FIGS. 14 and 15 are cross-sectional views illustrating an operation of a knob ring according to another embodiment of the present disclosure;
FIG. 16 is a block diagram illustrating a configuration of the cooking device according to one embodiment of the present disclosure;
FIG. 17 illustrates a first knob module and a second knob module configured to control a heating operation of a low-temperature heating module included in the cooking device according to one embodiment of the present disclosure;
FIG. 18 illustrates a method of setting a default temperature using the first knob module in one embodiment of the present disclosure;
FIG. 19 illustrates a method of precisely adjusting a preset temperature using the first knob module in one embodiment of the present disclosure;
FIG. 20 illustrates a method of setting a default time using the second knob module in one embodiment of the present disclosure;
FIG. 21 illustrates a method of precisely adjusting a preset time using the second knob module in one embodiment of the present disclosure;
FIG. 22 is a flowchart illustrating operation processes of the cooking device according to one embodiment of the present disclosure; and
FIG. 23 is a flowchart illustrating operation processes of a cooking device according to another embodiment of the present disclosure.

### DETAILED DESCRIPTION OF EXEMPLARY EMBODIMENTS

The above-described objects, features, and advantages will be described below in detail with reference to the attached drawings to allow one of ordinary skill in the art to execute the technical concept of the present disclosure easily. In the description of the embodiments of the present disclosure, a certainly detailed explanation of a well-known function or component of the related art will be omitted when it is deemed to unnecessarily obscure the essence of the present disclosure. Hereinafter, exemplary embodiments of the present disclosure will be described in detail with reference to the attached drawings. Throughout the drawings, like reference numerals refer to like or similar elements.

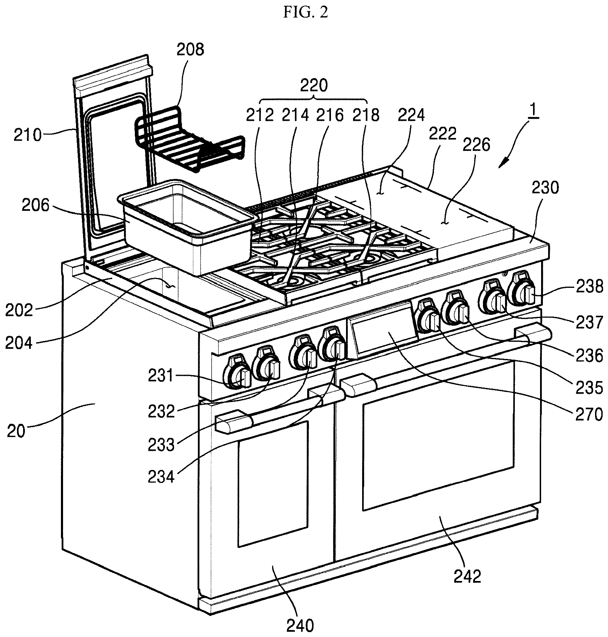

FIG. 2 is a perspective view of a cooking device according to one embodiment of the present disclosure.

Referring to FIG. 2, a cooking device 1 according to one embodiment of the present disclosure is a combination type cooking device and includes a plurality of heating modules. For example, as illustrated in the drawings, the cooking device 1 includes a low-temperature heating module 202, a gas heating module 220, and an induction heating module 222 which are disposed on an upper portion of a main body 20.

Further, a first oven, which is opened and closed by a first door 240 disposed on a front surface of the main body 20, and a second oven, which is opened and closed by a second door 242 disposed on the front surface of the main body 20, are disposed in a lower portion of the main body 20.

As a reference, types of the heating modules included in the cooking device 1 shown in FIG. 2 and a position and a disposition order of each of the heating modules are only one example and may vary according to embodiments.

A control panel 230 configured to control the heating operation of each of the heating modules is disposed above the first door 240 and the second door 242 of the front surface of the main body 20.

The control panel 230 includes a plurality of knob modules 231 to 238 configured to adjust at least one of a cooking temperature, a heating power level, and a cooking time of the low-temperature heating module 202, the gas heating module 220, and the induction heating module 222. As described below, each of the knob modules 231 to 238 includes a knob, a knob ring, and a display unit.

Further, the control panel 230 includes a touch panel 270. The touch panel 270 recognizes commands input by a user's touch operation or displays various information related to the cooking.

For example, the user may set the cooking temperature and/or the cooking time of the first or second oven using the touch panel 270, or control the heating operation of the first or second oven by inputting a heating operation start command or a heating operation end command through the touch operation. Further, the touch panel 270 may display various information related to the cooking of the food or the operation of the cooking device 1 such as the cooking temperature and/or the cooking time of the first or second oven, or an operation mode of the first or second oven.

Referring again to FIG. 2, the user may perform low-temperature vacuum cooking using the low-temperature heating module 202.

The low-temperature vacuum cooking method, which is also referred to as sous vide, is a cooking method in which food is vacuum packaged with a packaging material (for example, vinyl), and the vacuum-packaged food is heated in low-temperature water for a long time. By using the low-temperature vacuum cooking method, the original taste of a material may be utilized as it is, and texture, flavor, and nutrients of the material may be kept to the maximum. Especially, food cooked by the low-temperature vacuum cooking method is prevented from being toughed by the deformation of protein, so that the food is kept in a soft and moist state and the inside and outside of the food are heated uniformly.

In one embodiment of the present disclosure, the low-temperature heating module 202 includes an accommodation space 204 configured to accommodate a water container 206 and a cover 210 configured to open and close the accommodation space 204.

The accommodation space 204 is a space having a hexahedral shape for accommodating the water container 206 and may have a shape similar to the water container 206. A heating device (for example, an electric heater) for supplying the heat energy to the water container 206 accommodated in the accommodation space 204 is disposed on a bottom surface of the accommodation space 204. When the user places the water container 206 in the accommodation space 204 and then closes the cover 210 and inputs a start of the heating operation, power is supplied to the heating device in a lower portion the accommodation space 204, and the heating device heats the water container 206.

In order to use the low-temperature heating module 202, the user fills the water container 206 with water according to a marker line marked inside the water container 206. The user may place a rack 208 inside the water container 206 as necessary. When the rack 208 is used, it is possible to prevent a phenomenon in which the food placed in the water container 206 sinks on a bottom surface of the water container 206 so that the food is not boiled evenly. The user puts the water container 206 filled with the water into the accommodation space 204.

When the user uses the low-temperature heating module 202 to cook the food, the user may preheat the water in the water container 206 as needed.

When the user intends to preheat the water in the water container 206 in a state in which the heating operation of the low-temperature heating module 202 is not started, the user puts the water container 206 filled with the water into the accommodation space 204 and closes the cover 210 without putting food into the water container 206. Thereafter, the user sets a preheating temperature and/or the cooking time of the low-temperature heating module 202 using a first knob module 231 and/or a second knob module 232 to issue the heating operation start command to the low-temperature heating module 202.

When a temperature of the water container 206 or water in the water container 206 reaches the preheating temperature set by the user by the heating operation, the low-temperature heating module 202 informs the user that the preheating is completed through a preheating end notification operation. The user opens the cover 210 in a state in which the preheating is completed, puts a vacuum-packed food into the water container 206, and closes the cover 210. Thereafter, the user sets the preheating temperature and/or the cooking time using the first knob module 231 and/or the second knob module 232 of the low-temperature heating module 202 to issue the heating operation start command to the low-temperature heating module 202. Accordingly, the low-temperature cooking of the food is performed after the preheating.

Thereafter, when the cooking time set by the user or a preset time limit is reached, the low-temperature heating module 202 completes the heating operation and informs the user that the cooking of the food is completed through a cooking end notification operation.

When the user intends to perform the low-temperature cooking immediately without preheating the water inside the water container 206 in a state in which the heating operation of the low-temperature heating module 202 is not started, the user places the water container 206 filled with the water in the accommodation space 204, puts the vacuum-packed food into the water container 206, and closes the cover 210. Thereafter, the user sets the cooking temperature and/or the cooking time of the low-temperature heating module 202 using the first knob module 231 and/or the second knob module 232 to issue the heating operation start command to the low-temperature heating module 202.

When the temperature of the water container 206 or the water in the water container 206 reaches the cooking temperature set by the user by the heating operation, the low-temperature heating module 202 informs the user that the preheating is completed through a preheating end notification operation. Thereafter, when the user does not take any action until a predetermined waiting time passes, the low-temperature heating module 202 maintains the heating operation according to the cooking temperature previously set by the user until the cooking time set by the user or the preset time limit is reached.

Thereafter, when the cooking time set by the user or the preset time limit is reached, the low-temperature heating module 202 completes the heating operation and informs the user that the cooking of the food is completed through the cooking end notification operation.

In one embodiment of the present disclosure, the user may set the cooking temperature of the low-temperature heating module 202 using the first knob module 231 provided on the control panel 230. Further, the user may set the cooking time of the low-temperature heating module 202 using the second knob module 232 provided on the control panel 230.

Referring again to FIG. 2, the gas heating module 220 or a gas stove is disposed at one side of the low-temperature heating module 202.

The gas heating module 220 uses gas as a heating source to supply the heat energy to the food or the container containing the food. In the embodiment of FIG. 2, the gas heating module 220 includes a first gas heating module 212, a second gas heating module 214, a third gas heating module 216, and a fourth gas heating module 218. However, the number of individual modules constituting the gas heating module 220 may vary according to the embodiments.

The user may use a third knob module 233, a fourth knob module 234, a fifth knob module 235, and a sixth knob module 236, which are included in the control panel 230 and respectively correspond to the first gas heating module 212, the second gas heating module 214, the third gas heating module 216, and the fourth gas heating module 218, to adjust the heating power level and/or the cooking time of each of the gas heating modules.

For example, the user who intends to cook the food using the first gas heating module 212 of the gas heating module 220 rotates a knob of the third knob module 233 to an ignition position. Accordingly, a spark is generated by an ignition module of the first gas heating module 212, and simultaneously a gas valve is opened, and gas is supplied to ignite the flame.

When the ignition is completed, the user rotates the knob of the third knob module 233 to adjust a heating power level of the first gas heating module 212. The amount of gas supplied through the gas valve is adjusted according to the heating power level set by the user using the knob of the third knob module 233.

Further, the user may also set a duration time of the heating operation performed by the first gas heating module 212, i.e., the cooking time using a knob ring of the third knob module 233. When the user sets the cooking time using the knob ring of the third knob module 233, a start of the countdown of the cooking time set by the user is displayed through a display unit of the third knob module 233. When the cooking time set by the user is reached, an end of the countdown may be displayed through the display unit of the third knob module 233. Further, when the cooking time set by the user is reached, a audio indicating the end of the countdown may be output through a audio output unit provided in the cooking device 1.

In another embodiment, when the cooking time set by the user is reached, the control unit (not shown) may close the gas valve to shut off the gas supply, thereby terminating the heating operation.

When the user does not set the cooking time, the control unit (not shown) may end the heating operation according to the heating operation end command of the user or end the heating operation after the predetermined time limit passes.

Referring again to FIG. 2, the induction heating module 222 or an induction range is disposed at one side of the gas heating module 220. The induction heating module 222 heats the container placed on heating areas 224 and 226 using working coils disposed therein.

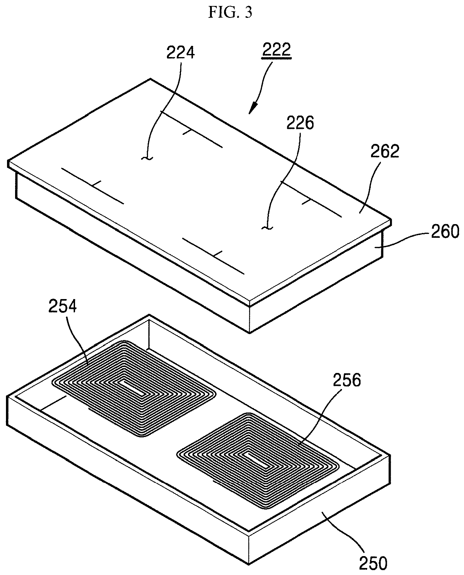

FIG. 3 illustrates a configuration of the induction heating module included in the cooking device according to one embodiment of the present disclosure.

Referring to FIG. 3, the induction heating module 222 provided in the cooking device according to one embodiment of the present disclosure includes a case 250 and a cover plate 260 coupled to the case 250 to seal the case 250.

A bottom surface of the cover plate 260 is coupled to an upper surface of the case 250 to seal a space formed inside the case 250 from the outside. An upper surface of the cover plate 260 is formed with an upper plate 262 on which an object to be heated, that is, a container for cooking food may be placed. The upper plate 262 may be made of various materials, such as tempered glass, for example, ceramic glass.

Working coils 254 and 256 configured to heat the container are disposed in an inner space of the case 250, which is formed by coupling the cover plate 260 to the case 250. The heating areas 224 and 226, which correspond to positions of the working coils 254 and 256 disposed at the inner space of the case 250, are formed on the upper plate 262 of the cover plate 260.

A power supply unit (not shown) configured to supply power to the working coils 254 and 256 and an interface unit 114 is disposed at the inner space of the case 250. The power supply unit (not shown) is electrically connected to the working coils 254 and 256, and converts power applied from an external power supply into power suitable for driving the working coils 254 and 256 according to the control of the control unit (not shown), and supplies the power to the working coils 254 and 256.

The control unit (not shown) controls the power supply unit (not shown) according to heating power levels and/or cooking time of the heating areas 224 and 226 set by the user using a seventh knob module 237 or an eighth knob module 238 of FIG. 2 to adjust a supply of the power and an amount of the power of each of the working coils 254 and 256 respectably corresponding the heating areas 224 and 226.

As a reference, although an embodiment in which two working coils 254 and 256 are disposed at the inner space of the case 250 is shown in FIG. 3, depending on the embodiments, either one working coil or two or more working coils may also be disposed at the inner space of the case 250.

When a high-frequency alternating current supplied by the power supply unit (not shown) is applied to the working coils 254 and 256, an induction magnetic field is formed on a periphery of the working coils 254 and 256. When magnetic force lines of the induction magnetic field generated as described above, pass through the bottom of the container including a metal component, which is placed on the heating areas 224 and 226, an eddy current is generated inside the bottom of the container. When the eddy current generated as described above flows through the bottom of the container, the container itself is heated.

In one embodiment of the present disclosure, the control unit (not shown) may sense whether or not a heatable container is present on the heating areas 224 and 226 using a container sensing function. When it is determined that the container is not present on the heating areas 224 and 226 as a result of the container sensing, the control unit (not shown) may display a symbol indicating that the container is not present through a display unit included in the seventh knob module 237 or the eighth knob module 238.

Further, the control unit (not shown) may control the power supply unit (not shown) to supply the power to the working coils 254 and 256 only when the heatable container is present on the heating areas 224 and 226 as the result of the container sensing, and otherwise control the power supply unit (not shown) not to supply the power to the working coils 254 and 256 even when the user requests the start of the heating operation.

Also, in one embodiment of the present disclosure, the induction heating module 222 may operate in either a normal mode or a flexible mode.

The normal mode refers to a mode in which each of the working coils 254 and 256 included in the induction heating module 222 operates as a separate heating source. That is, when the induction heating module 222 is set to the normal mode, the user may heat two different containers, each of which corresponds to a size of each of the heating area 224 and the heating area 226. In the normal mode, the user may separately control the heating operations of the heating area 224 and the heating area 226 using the seventh knob module 237 and the eighth knob module 238.

The flexible mode refers to a mode in which the working coils 254 and 256 included in the induction heating module 222 operate as a single heating source. That is, when the induction heating module 222 is set to the flexible mode, the heating area 224 and the heating area 226 operate as if they are a single heating area. Accordingly, the user may perform the cooking using a large-sized container covering both the heating area 224 and the heating area 226. In the flexible mode, the user may control the heating operations of the heating areas 224 and 226 using only one knob module of the seventh knob module 237 and the eighth knob module 238

When the user sets the cooking time using the seventh knob module 237 or the eighth knob module 238, the control unit (not shown) terminates the supply of the power from the power supply unit (not shown) to the working coils 254 and 256 as the cooking time passes. When the user does not set the cooking time, the control unit (not shown) may end the heating operation according to the heating operation end command of the user or end the heating operation after the predetermined time limit passes.

The user may set the duration time of the heating operation performed in the heating areas 224 and 226, i.e., the cooking time, using a knob ring of the seventh knob module 237 or the eighth knob module 238. When the user sets the cooking time using the knob ring of the seventh knob module 237 or the eighth knob module 238, a start of the countdown of the cooking time set by the user is displayed through a display unit of the seventh knob module 237 or the eighth knob module 238. When the cooking time set by the user is reached, an end of the countdown may be displayed through the display unit of the seventh knob module 237 or the eighth knob module 238. Further, when the cooking time set by the user is reached, a audio indicating the end of the countdown may be output through the audio output unit provided in the cooking device 1.

In another embodiment, when the cooking time set by the user is reached, the control unit (not shown) may cut off the supply of the power from the power supply unit (not shown) to the working coils 254 and 256, thereby completing the heating operation.

When the user does not set the cooking time, the control unit (not shown) may end the heating operation according to the heating operation end command of the user or end the heating operation after the predetermined time limit passes.

Further, the control unit (not shown) may stop immediately the heating operation when it is sensed that the container is removed while the heating operation is being performed as it is confirmed that the container is present on the heating areas 224 and 226, and inform the user that the container is not present on the heating areas 224 and 226 through the display unit or the audio output unit (not shown) included in the knob module.

Hereinafter, a method of operating the first knob module 231 and the second knob module 232 to control the low-temperature heating module 202 included in the cooking device 1 according to one embodiment of the present disclosure will be described.

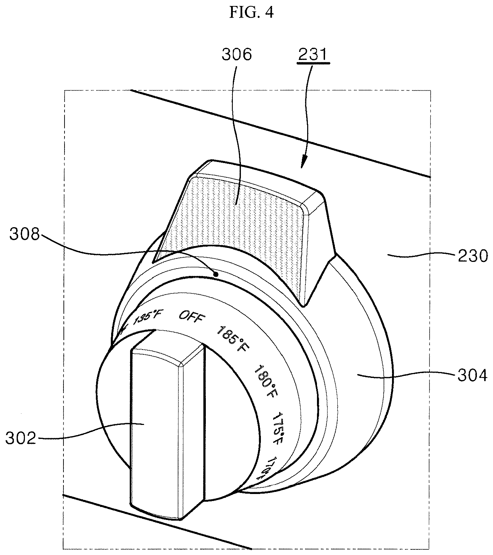

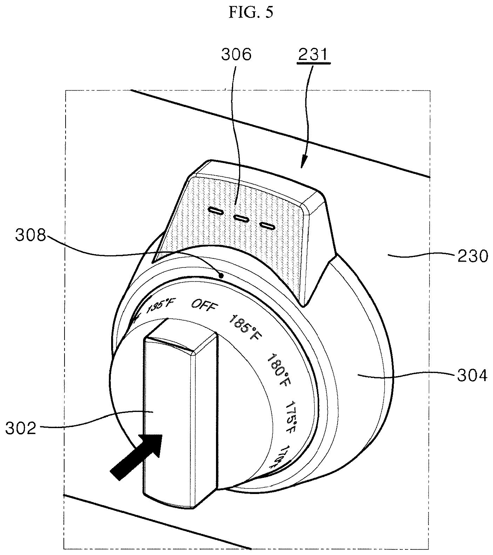

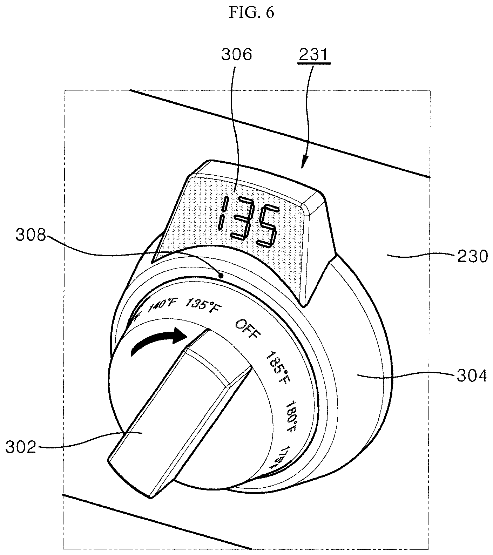

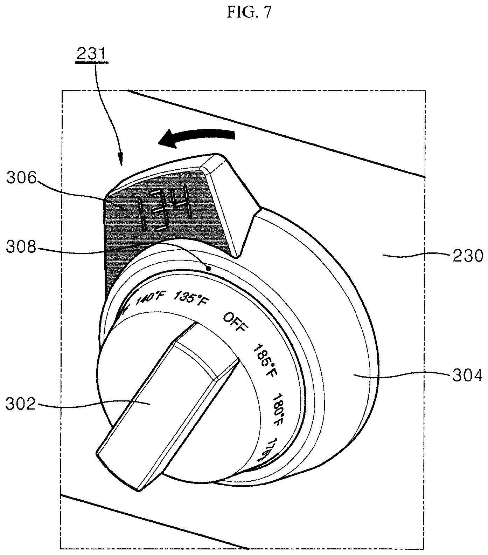

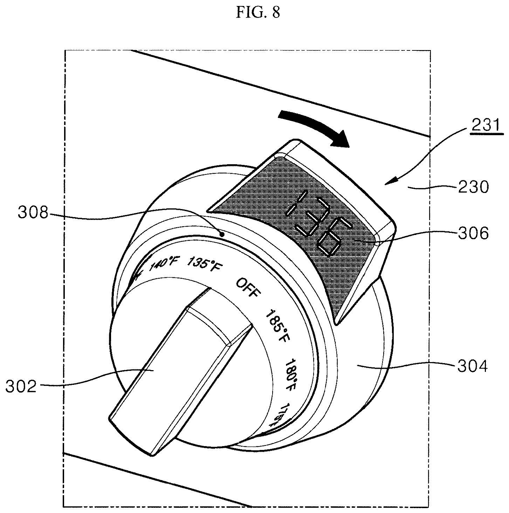

FIG. 4 illustrates an initialized state of the knob module included in the cooking device according to one embodiment of the present disclosure. FIG. 5 illustrates a state in which the knob of the knob module according to one embodiment of the present disclosure is pushed. FIG. 6 illustrates a state in which the knob of the knob module according to one embodiment of the present disclosure is rotated. FIG. 7 illustrates a state in which the knob ring of the knob module
according to one embodiment of the present disclosure is moved in a first direction. FIG. 8 illustrates a state in which the knob ring of the knob module according to one embodiment of the present disclosure is moved in a second direction.

As a reference, although the method of operating the first knob module 231 for setting the cooking temperature of the low-temperature heating module 202 is shown in FIGS. 4 to 8, the second knob module 232 for setting the cooking time of the low-temperature heating module 202 may also be operated in the same manner as the first knob module 231.

As shown in FIGS. 4 to 8, the first knob module 231 is coupled to the control panel 230 and disposed to protrude in a front surface direction of the control panel 230. The first knob module 231 includes a first knob 302, a first knob ring 304, and a first display unit 306.

In one embodiment of the present disclosure, the first knob 302 operates in a push-and-turn manner. That is, when the user intends to set the temperature using the first knob 302, the user has to rotate the first knob 302 in a state (a pushed state) in which the pressure is applied to the first knob 302 in a direction toward the control panel 230 while the knob of the first knob 302 is grasped. Depending on the embodiment, the temperature setting may be possible by simply rotating the first knob 302 without pushing first knob 302.

The first knob 302 may be infinitely rotated in the first direction (for example, counterclockwise) or in the second direction (for example, clockwise). As shown in FIGS. 4 to 8, a plurality of default temperatures (135°F, 185°F, 180°F,...), which are corresponding to the respective rotational positions of the first knob 302 and set to have preset intervals, are marked on a surface of the first knob 302.

In the embodiment of FIGS. 4 to 8, the default temperature (185 °F, 180 °F,...) assigned to the first knob 302 is set such that it increases or decreases by 5°F whenever the first knob 302 rotates by 30°. However, this is merely an example, and the value of each default temperature or a rotation angle of the first knob 302 corresponding to each default temperature may be set differently according to the embodiments.

The first knob ring 304 is a ring-shaped member surrounding the first knob 302 and rotates only by a predetermined angle in the first direction (for example, counterclockwise) or the second direction (for example, clockwise). That is, the user applies the pressure to the first knob ring through an outer surface of the first knob ring 304 or the first display unit 306 to move the first knob ring 304 in the first or second direction only within the predetermined angle. When the pressure applied to the first knob ring 304 by the user disappears, the first knob ring 304 returns to its initial position again.

In the present disclosure, an operation, in which the first knob ring 304 returns to its initial position before a preset reference time (for example, 2 seconds) passes after the user moves the first knob ring 304 in any direction within the predetermined angle, is defined as a click operation of the first knob ring 304. Also, an operation, in which a state in which the first knob ring 304 is moved is maintained over the preset reference time (for example, 2 seconds) after the user moves the first knob ring 304 in any direction within the predetermined angle, is defined as a holding operation of the first knob ring 304.

When the first knob ring 304 is moved within the predetermined angle in the first or second direction, the cooking temperature increases or decreases by a preset adjustment unit (for example, 1°F). For example, when the user clicks the first knob ring 304 in the first direction (for example, counterclockwise), the cooking temperature set by the user decreases by 1°F. Further, when the user clicks the first knob ring 304 in the second direction (for example, clockwise), the cooking temperature set by the user increases by 1 °F.

When the pressure applied to the first knob ring 304 by the user is released, and the first knob ring 304 returns to its initial position, a holding state of the first knob ring 304 is released, and the increase or decrease of the cooking temperature is also terminated.

As another example, when the user holds the first knob ring 304 in the first direction (for example, counterclockwise), the cooking temperature set by the user continuously decreases by the preset adjustment unit (for example, 1°F) according to a preset speed until the holding state of the first knob ring 304 is released. Further, when the user holds the first knob ring 304 in the second direction (for example, clockwise), the cooking temperature set by the user continuously increases by the preset adjustment unit (for example, 1°F) according to the preset speed until the holding state of the first knob ring 304 is released.

When the pressure applied to the first knob ring 304 by the user is released and the first knob ring 304 returns to its initial position, the holding state of the first knob ring 304 is released, and the increase or decrease of the cooking time is also terminated.

Thus, the user may operate the first knob ring 304 to adjust the cooking temperature or the cooking time precisely.

The cooking temperature set or adjusted by the user according to the operation of the first knob 302 or the first knob ring 304 is displayed in numerals on the first display unit 306. Further, various types of letters, numerals, or symbols indicating the operation state of the low-temperature heating module 202 may be displayed on the first display unit 306.

A process of setting the cooking temperature of the low-temperature heating module 202 by the user using the first knob module 231 will be described below.

First, as shown in FIG. 4, when the power of the cooking device 1 is in an off-state, or the power of the cooking device 1 is in an on-state but the low-temperature heating module 202 does not start the heating operation, the first knob module 231 may be maintained in the initialized state. In the initialized state, nothing is displayed on the first display unit 306.

When the user pushes the first knob 302 by applying the pressure in a direction toward the control panel 230 in the initialized state, as shown in FIG. 5, the first knob 302 is pushed by a certain distance toward the control panel 230.

In a state in which the first knob 302 is pushed, the user rotates the first knob 302 with reference to the default temperature (135°F, 185°F, 180°F,...) marked on the surface of the first knob 302. As shown in FIG. 6, the user rotates the first knob 302 such that the position, in which the default temperature to be set is marked among the default temperatures (135°F, 185°F, 180°F,...) marked on the surface of the first knob 302, matches with a position of a reference point 308.

When the user rotates the first knob 302 such that "135°F" is positioned at the reference point 308 and releases the pressure applied to the first knob 302 as in the embodiment of FIG. 6, the cooking temperature of the low-temperature heating module 202 is set to 135°F. Here, the cooking temperature set by the user is displayed on the first display unit 306 as a numeral "135".

In a state in which the cooking temperature is set to 135°F using the first knob 302, the user may precisely adjust the cooking temperature by operating the first knob ring 304. Whenever the user clicks or holds the first knob ring 304 in the first direction, the cooking temperature displayed on the first display unit 306 decreases. Further, whenever the user clicks or holds the first knob ring 304 in the second direction, the cooking temperature displayed on the first display unit 306 increases.

For example, in a state in which the cooking temperature is set to 135°F, when the user clicks the first knob ring 304 once in the first direction (counterclockwise) as shown in FIG. 7, the cooking temperature decreases by 1°F and is adjusted to 134°F, and "134" is displayed on the first display unit 306.

Further, in a state in which the cooking temperature is set to 134°F, when the user clicks the first knob ring 304 twice in the second direction (clockwise) as shown in FIG. 8, the cooking temperature increases by 2°F and is adjusted to 136°F, and "136" is displayed on the first display unit 306.

In this way, the user may set the cooking temperature of the low-temperature heating module 202.

Further, although not shown in the drawings, the user may set the cooking time of the low-temperature heating module 202 by operating a second knob and a second knob ring included in the second knob module 232 in the same manner as described above.

As described above, the user may operate the first knob 302 and the first knob ring 304, which are included in the first knob module 231, to set the desired cooking temperature and cooking time very quickly and precisely.

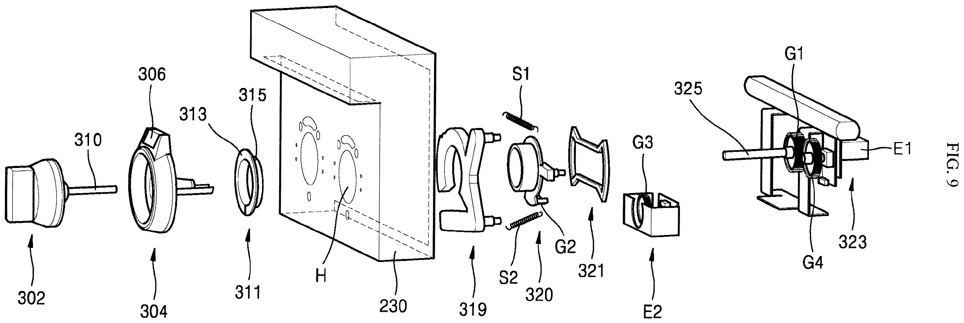

FIG. 9 is an exploded view of the knob module according to one embodiment of the present disclosure.

A knob 302 is formed with a handle formed on an upper portion of a body thereof having a circular shape and a knob shaft connected to an adjustment shaft 325 of a heating power adjustment unit 324. Although the handle has a shape protruding in a bar shape in the illustrated embodiment, the shape of the handle may be variously changed.

The knob 302 may be infinitely rotated in the first direction (for example, counterclockwise) or in the second direction (for example, clockwise). When the user rotates the knob 302, the knob 302 maintains the position where the user moved without returning to the initial position. In one embodiment of the present disclosure, the knob 302 may be configured as a non-return type rotary switch.

When the heating module controlled by the knob module is a gas heating module or a gas stove, the heating power adjustment unit 324 becomes a valve assembly. Further, when the heating module controlled by the knob module is an induction heating module or an induction range, the heating power adjustment unit 324 becomes a heating power level adjusting device (for example, a variable resistor) configured to adjust the heating power level.

The knob 302 may be made of a synthetic resin injection material or may be manufactured by processing a metal material. The material and shape of the knob 302 may be variously modified.

When the knob 302 is rotated, a rotation direction and/or and a rotation amount of the knob 302 is sensed by a knob sensor E1 connected through the knob shaft and the adjustment shaft 325. When the knob 302 is rotated, a gear G1 coupled to the adjustment shaft 325 and a gear G4 engaged with the gear G1 are rotated. The knob sensor E1 senses the rotation direction and/or the rotation amount of the knob 302 on the basis of the rotation amount of the gear G4 and transmits the sensed rotation direction and/or rotation amount to the control unit (not shown). The control unit (not shown) may calculate a current position of the knob 302 on the basis of the rotation direction and/or the rotation amount sensed by the knob sensor E1.

The knob ring 304 has a circular ring shape and is disposed on an outer peripheral surface of the knob 302. The knob ring 304 supports the knob 302 and finishes an exterior of a periphery of the knob 302 to improve the quality of the exterior of the knob module.

The knob ring 304 may rotate independently of the knob 302. The knob ring 304 may not rotate indefinitely unlike the knob 302 and moves only within the predetermined angle in the first direction (for example, counterclockwise) or the second direction (for example, clockwise).

When the knob ring 304 is rotated by the user, the rotation direction and/or the rotation amount of the knob ring 304 is sensed by a knob ring sensor E2. When the knob ring 304 is rotated, a gear G2 provided in a support ring 320 connected to the knob ring 304 and a gear G3 engaged with the gear G2 are rotated. The knob ring sensor E2 senses the rotation direction and/or the rotation amount of the knob ring 304 on the basis of the rotation direction and/or the rotation amount of the gear G3, and transmits the sensed rotation direction and/or rotation amount to the control unit (not shown). The control unit (not shown) may confirm the rotation direction of the knob ring 304 and whether the knob ring 304 is rotated on the basis of the rotation direction and/or the rotation amount sensed by the knob ring sensor E2.

A display unit 123 is formed on an outer peripheral surface of the knob ring 304. Values (for example, the cooking temperature or the cooking time) changing by the movement of the knob 302 or the knob ring 304 are displayed on the display unit 123. Further, various information related to an operation state and the operation mode of the heating module may be displayed on the display unit 123.

Letters or numerals displayed on the display unit 123 may be displayed in different colors according to the type of the heating module controlled by the knob module or the type of letters or numerals displayed on the display unit 123. For example, the cooking temperature and the heating power level are displayed in a red color, and the cooking time may be displayed in a white color or a blue color.

The knob 302 and the knob ring 304 are exposed in a front surface direction of the control panel 230 in a coupled state.

A bearing shell 311 includes a body part 315 having a cylindrical shape and a circular plate part 313 which is bent in the body part 315 and protrudes in a radial direction. The body part 315 is inserted into a space between an outer peripheral surface of the support ring 320 coupled with the knob ring 304 and an inner peripheral surface of a fixing frame 322 to reduce friction between the support ring 320 and the fixing frame 322.

The circular plate part 313 is inserted into a space between the control panel 230 and the knob ring 304 to reduce friction between the knob ring 304 and the control panel 230. The circular plate part 313 allows the knob ring 304 to be spaced apart from the control panel 230 by a certain distance, thereby reducing scratch or abrasion of the control panel 230 due to the friction generated between the knob ring 304 and the control panel 230 when the knob ring 304 rotates.

A support frame 319 is coupled to a rear surface of the control panel 230 to support the knob ring 304. Further, the support frame 319 surrounds the outer peripheral surface of the support ring 320 and supports the support ring 320 so that the support ring 320 may rotate around a certain axis.

The support ring 320 is coupled to a rear surface of the knob ring 304 and rotates integrally with the knob ring 304. Accordingly, a rotation amount of the support ring 320 is the same as a rotation amount of the knob ring 304. Thus, when the rotation amount of the support ring 320 is sensed, the rotation amount of the knob ring 304 may be sensed. The support ring 320 may be provided with the gear G2 to sense the rotation amount of the support ring 320.

The fixing frame 322 is fixed to the support frame 319 by fastening components such as a screw and prevents the support ring 320 from being separated from the support frame 319.

Further, the fixing frame 322 constrains a rotation range of the support ring 320 such that the support ring 320 and the knob ring 304 rotates in leftward and rightward directions only within the predetermined angle.

As illustrated in the drawings, the fixing frame 322 is formed to have a shape like a bow tie. A portion corresponding to a wing of the fixing frame 322 restricts the support ring 320 to rotate within the predetermined angle. Further, a portion connecting both wings of the fixing frame 322 fixes the support ring 320 to prevent the support ring 320 from being separated.

Meanwhile, the knob ring 304 according to the present disclosure has a return type operation structure. In other words, the knob ring 304 returns to its initial position when the pressure applied by the user is released in a state in which the user applies the pressure and the knob ring 304 moves in the first or second direction.

Return springs S1 and S2 provide a restoring force which causes the knob ring 304 to return to its original position. A first return spring S1 provides a restoring force in a clockwise direction, and a second return spring S2 provides a restoring force in a counterclockwise direction. Elastic forces of the first return spring S1 and the second return spring S2 are balanced with respect to each other so that the knob ring 304 maintains its initial position unless the pressure is applied to the knob ring 304 from the outside.

Both ends of the return springs S1 and S2 may be respectively fixed to the support ring 320 and the support frame 319. Since the support ring 320 and the knob ring 304 integrally rotate, the knob ring 304 maintains its initial position by the elastic forces of the return springs S1 and S2, and may rotate in the clockwise or counterclockwise direction within the predetermined angle.

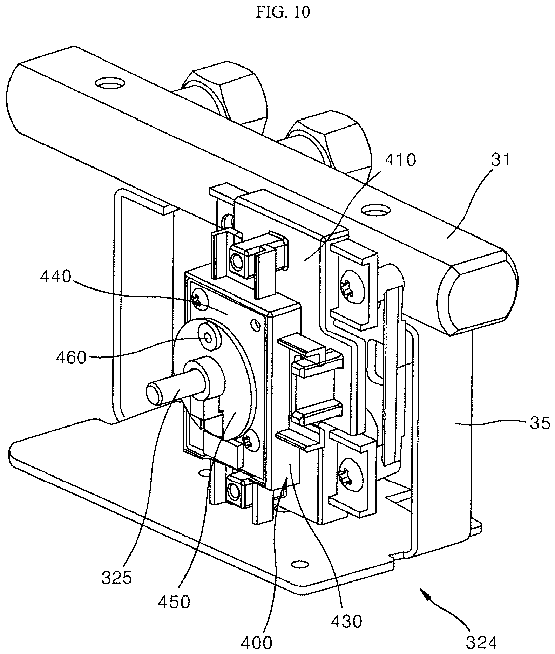

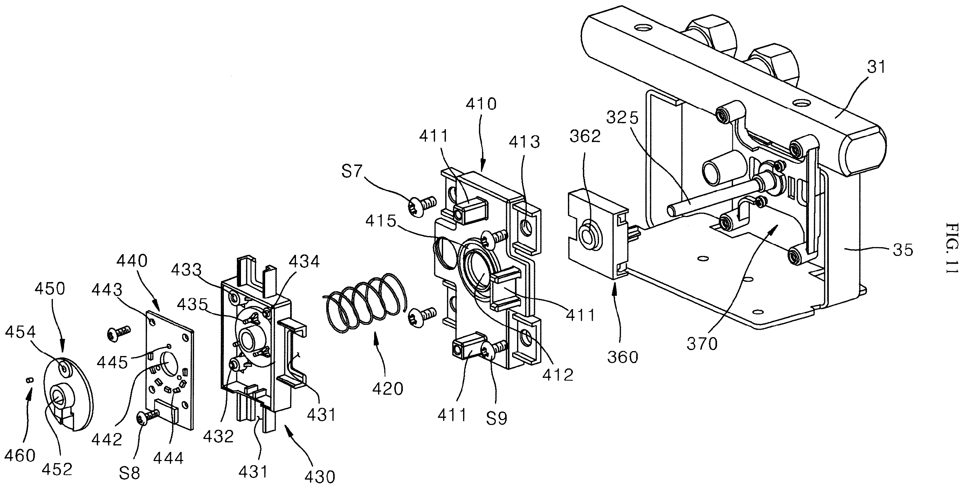

FIG. 10 is a perspective view of a heating power adjustment unit according to another embodiment of the present disclosure. FIG. 11 is an exploded view of the heating power adjustment unit according to another embodiment of the present disclosure.

As shown in the drawings, the heating power adjustment unit 324 includes a valve 370 combined with a gas pipe 31 and a gas pipe frame 35, an ignition switch 360 fitting on a valve shaft 325 of the valve 370, and a knob sensor 400.

The knob sensor 400 may detect a rotation angle of a valve shaft 330 by sensing a position of a knob sensor magnet 460 included in a rotating plate 450 through a plurality of hall sensors 444 arranged radially on a knob sensor substrate 440.

As shown in FIG. 11, the plurality of hall sensors 444 are arranged at equidistance radially on the knob sensor substrate 440. Hereinafter, a rightmost hall sensor is referred to as a first hall sensor, and other hall sensors will be sequentially referred to as second to seventh hall sensors.

The knob sensor 400 forms absolute coordinates by generating a different signal for each of the hall sensors 444 and detects a position of the knob sensor magnet 460 using the absolute coordinates.

That is, regardless of an immediately preceding position of the knob sensor magnet 460, when a finally received signal is a signal generated by an nth hall sensor, the knob sensor 400 determines a position of the knob sensor magnet 460 is a position corresponding to an nth hall sensor area.

Accordingly, even when a knob is rapidly operated, it is possible to precisely sense a final position of the knob sensor magnet 460 in a state in which rotation of a knob handle is grasped. Accordingly, a set value may be accurately detected.

The knob sensor 400 includes a knob sensor plate 410 fastened to the valve 370, a knob sensor housing 430 combined with the knob sensor plate 410 to be movable in an axial direction, a sensor spring 420 providing an elastic force between the knob sensor housing 430 and the knob sensor plate 410, the knob sensor substrate 440 which includes the hall sensors 444 and is fastened to the knob sensor housing 430, and the rotating plate 450 which is combined with the valve shaft, rotates integrally with the valve shaft, and is combined with the knob sensor magnet 460 sensed by the hall sensors 444.

The ignition switch 360 includes a valve shaft combination hole 362 having a D-shaped cross section. Accordingly, the ignition switch 360 receives a rotation force of the valve shaft such that an on/off state of the ignition switch 360 may be converted according to a rotation angle of the valve shaft. The ignition switch 360 changes to an on state when the valve shaft rotates by a certain angle and generates sparks at a fuel intake.

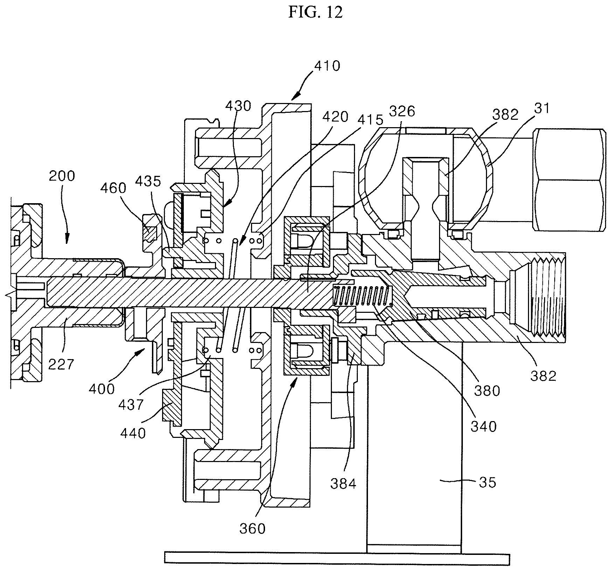

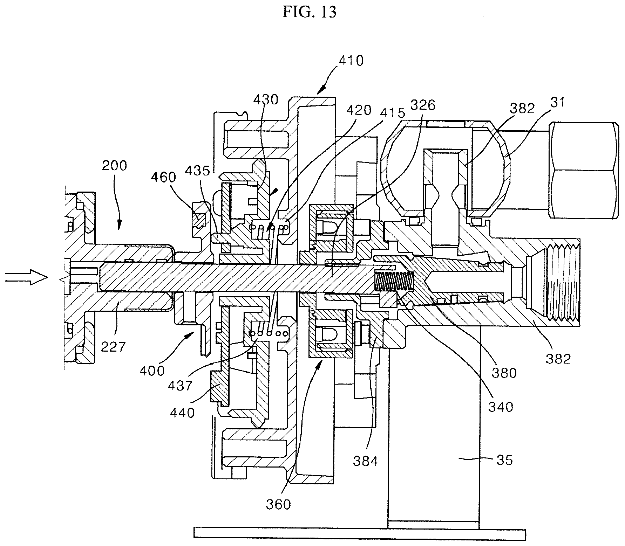

FIGS. 12 and 13 are cross-sectional views illustrating an operation of the heating power adjustment unit according to another embodiment of the present disclosure.

Referring to FIGS. 12 and 13, as a pressure is applied to the knob, a universal joint 200 moves in a direction of compressing the sensor spring 420. The sensor spring 420 and a valve spring 340 are compressed by movement of the universal joint 200, and the knob sensor housing 430, to which a rotating plate 50 and the knob sensor substrate 440 are fastened, and the valve shaft 325 move in a direction in which the sensor spring 420 is compressed.

When the pressure applied to the knob is removed, due to restoring forces of the valve spring 340 and the sensor spring 420, the knob sensor housing 430, to which the valve shaft 325 and the knob sensor substrate 440 are fastened, and the rotating plate 450 return to initial positions.

The knob sensor plate 410 is fastened to a valve cap 384, and the sensor spring 420 provides an elastic force in a direction in which the knob sensor housing 430 is pressed against the rotating plate 450. Accordingly, the rotating plate 450 comes into contact with a first shaft combination pipe 227 of the universal joint 200, and a supporting protrusion 435 of the knob sensor housing 430 comes into contact with the rotating plate 450.

A state in which the supporting protrusion 435 of the knob sensor housing 430 is in contact with the rotating plate 450 is always maintained when the knob is not pressed as shown in FIG. 6 or when the knob is pressed as shown in FIG. 7.

Accordingly, since the rotating plate 450 and the knob sensor plate 410 of the knob sensor may constantly maintain a uniform distance therebetween despite axial movement of the valve shaft, a distance between the knob sensor magnet 460 disposed on the rotating plate 450 and the hall sensors 444 arranged on the knob sensor plate 410 may be uniformly maintained. This structure increases operational reliability of the knob sensor 400.

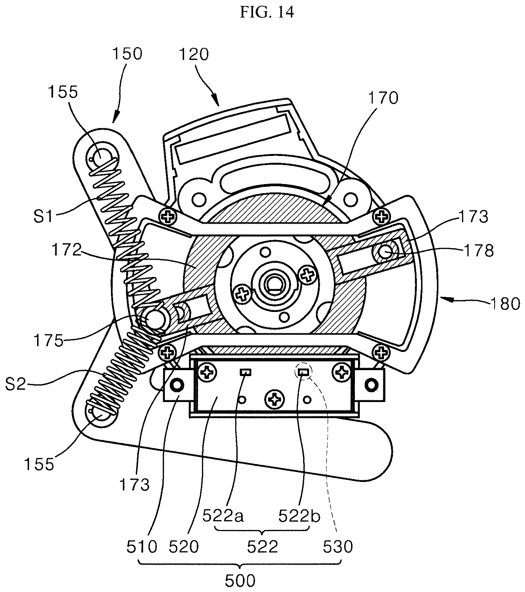

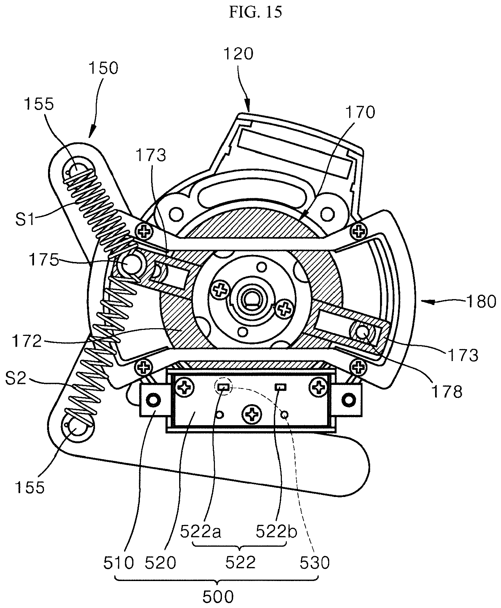

FIGS. 14 and 15 are cross-sectional views illustrating an operation of a knob ring according to another embodiment of the present disclosure.

Operating of a knob ring 120 may be recognized by rotation of an operational ring 170 rotated in cooperation with rotation of the knob ring 120. A knob ring sensor 500 is installed near the operational ring 170 and may sense the rotation of the knob ring 120 by sensing the rotation of the operational ring 170.

The operational ring 170 is combined with a pair of such return springs S1 and S2 which provide elastic forces for returning the operational ring 170 rotated to a position spaced apart from an initial position to the initial position.

Since the operational ring 170 and the knob ring 120 rotate integrally, the knob ring 120 remains in an initial position due to the elastic forces of the return springs S1 and S2 connected to the operational ring 170. Also, when a pressure is applied to the knob ring 120 which remains in the initial position as described above, the knob ring 120 may rotate within the predetermined angle clockwise or counterclockwise and may return to the initial position again due to the restoring forces provided by the return springs S1 and S2 when the pressure is related in a rotated state.

A position of a knob ring sensor magnet 530 is changed according to the rotation of the operational ring 170. The knob ring sensor 500 senses the rotation of the operational ring 170 by sensing a change in position of the knob ring sensor magnet 530 and senses the rotation of the knob ring 120 connected to the operational ring 170 therethrough.

The knob ring sensor magnet 530 is a component to be sensed by the knob ring sensor 500 and is installed on the operational ring 170. In the embodiment, it is exemplified that the knob ring sensor magnet 530 is installed on a circular plate part 172 of the operational ring 170. In the drawing, since the knob ring sensor magnet 530 is located on a rear surface of a knob ring sensor substrate 520, it is shown as a dotted line.

The knob ring sensor magnet 530 is installed on the circular plate part 172 to be disposed on one side surface of the circular plate part 172 facing the knob ring sensor 500. The knob ring sensor magnet 530 installed as described above is rotated with the operational ring 170 when the operational ring 170 rotates.

In the embodiment, it is exemplified that the knob ring sensor magnet 530 is disposed in a position adjacent to an outer circumferential surface of the circular plate part 172. The knob ring sensor magnet 530 disposed in the above-described position draws a track similar to a shape of an outer circumferential surface of the circular plate part 172 having a circular shape during the rotation of the operational ring 170 such that a position of the knob ring sensor magnet 530 may change.

The knob ring sensor 500 is provided to sense the change in position of the knob ring sensor magnet 530 and is fastened to a support frame 150 on a rear surface of the operational ring 170.

The knob ring sensor 500 includes a knob ring sensor housing 510, the knob ring sensor substrate 520, and hall sensors 522a and 522b.

The knob ring sensor housing 510 is fixedly installed on the support frame 150, that is, in more detail, on a bottom part of a frame body part 141. The knob ring sensor substrate 520 connected to the control unit of the cooking device is installed on the knob ring sensor housing 510.

In the embodiment, it is exemplified that the knob ring sensor substrate 520 is installed on the knob ring sensor housing 510 to be installed on a side facing the frame body part 141 and the knob ring sensor magnet 530. Also, a sensor for sensing the change in position of the knob ring sensor magnet 530 is installed on the knob ring sensor substrate 520.

The knob ring sensor 500 having the above components senses a position of the knob ring sensor magnet 530 in a non-contact manner like the knob sensor 400. To this end, the knob ring sensor magnet 530 may include a magnetic member which generates a magnetic force, and the knob ring sensor 500 may include a hall sensor 522 which senses the magnetic force of the magnetic member which approaches within a certain distance.

The hall sensor 522 is installed on the knob ring sensor substrate 520, senses the magnetic force of the knob ring sensor magnet 530 when the knob ring sensor magnet 530 approaches the hall sensor 522 within a certain distance, and generates a signal corresponding thereto.

The knob ring sensor 500 includes a plurality of such hall sensors 522, and the plurality of hall sensors 522 are arranged to be spaced at certain intervals apart along a rotational path of the knob ring sensor magnet 530.

That is, when the knob ring sensor magnet 530 rotates while drawing a circular track similar to the shape of the outer circumferential surface of the circular plate part 172 during the rotation of the operational ring 170, the plurality of hall sensors 522 are arranged on the knob ring sensor 500 to be located on an arc corresponding to a rotational track of the knob ring sensor magnet 530.

In the embodiment, arrangements of the hall sensors 522a and 522b and the knob ring sensor magnet 530 are exemplified that the pair of hall sensors 522a and 522b are arranged on the knob ring sensor 500, and the knob ring sensor magnet 530 is located between the pair of hall sensors 522 when the knob ring 120 and the operational ring 170 are in the initial positions.

Accordingly, when the knob ring 120 rotates in one direction, the knob ring sensor magnet 530 approaches any one of the pair of hall sensors 522 (hereinafter, referred to as a left hall sensor) within a certain distance such that the corresponding hall sensor 522a senses the knob ring sensor magnet 530. When the knob ring 120 rotates in the other direction, the knob ring sensor magnet 530 approaches the other of the pair of hall sensors 522 (hereinafter, referred to as a right hall sensor) within a certain distance such that the corresponding hall sensor 522b senses the knob ring sensor magnet 530.

To provide a cooking time setting function or timer function, when the knob ring 120 rotates in one direction, the knob ring sensor magnet 530 approaches the left hall sensor 522a within a certain distance such that the left hall sensor 522a senses the knob ring sensor magnet 530. Accordingly, operating of the knob ring 120 for initiating a cooking time setting mode is sensed by the knob ring sensor 500 such that the cooking time setting mode may be started.

Also, when the knob ring 120 is rotated in the other direction, the knob ring sensor magnet 530 approaches the right hall sensor 522b within a certain distance such that the right hall sensor 522b senses the knob ring sensor magnet 530. Accordingly, operating of the knob ring 120 for initiating the cooking time setting mode is sensed by the knob ring sensor 500 such that the cooking time setting mode may be started.

In the embodiment, it is exemplified that the hall sensors 522 generate different types of signals. That is, a signal generated by the left hall sensor 522a differs from a signal generated by the right hall sensor 522b.

Utilizing this, the knob ring 120 may be configured to have a function of setting a cooking time to be different according to a rotation direction of the knob ring 120 or a function of providing a different function according to the rotation direction of the knob ring 120.

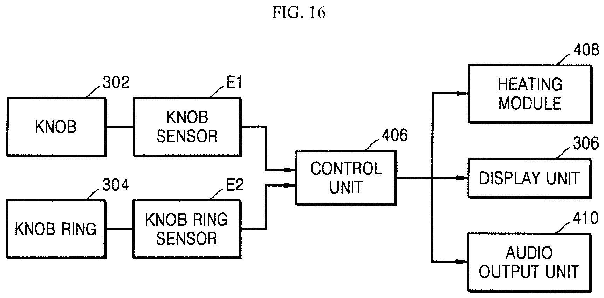

FIG. 16 is a block diagram illustrating a configuration of the cooking device according to one embodiment of the present disclosure.

When the user pushes the knob 302 and applies the pressure in the first or second direction, the knob 302 rotates. The rotation direction and/or the rotation amount of the knob 302 is sensed by the knob sensor E1, and the knob sensor E1 transmits the sensed rotation direction and/or rotation amount of the knob 302 to a control unit 406.

The control unit 406 calculates the current position of the knob 302 on the basis of the rotation direction and/or the rotation amount of the knob 302 transmitted from the knob sensor E1, and determines the value (for example, the cooking temperature or the cooking time) set by the user by rotating the knob 302 on the basis of the calculated position. For example, when it is confirmed that the knob 302 is rotated by 30° in the second direction, that is, the clockwise direction from its initial position, the control unit 406 determines a temperature value (for example, 135°F) assigned to a position rotated by 30° in the clockwise direction as the cooking temperature set by the user.

Further, when the user applies the pressure in the first or second direction in a state in which the user touches the knob ring 304 or the display unit 306 with a part (for example, a finger) of his or her body, the knob ring 304 rotates. The rotation direction and/or the rotation amount due to the rotation of the knob ring 304 is sensed by the knob ring sensor E2, and the knob ring sensor E2 transmits the sensed rotation direction and/or rotation amount of the knob ring 304 to the control unit 406.

The control unit 406 determines the rotation direction of the knob ring 304
and whether knob ring 304 is rotated on the basis of the rotation direction and/or the rotation amount of the knob ring 304 transmitted from the knob ring sensor E2. The control unit 406 determines that the knob ring 304 is rotated only when the knob ring 304 is rotated by a predetermined reference angle.

Further, the control unit 406 compares a time at which the knob ring 304 is rotated by the predetermined reference angle and then maintains the rotation state with the predetermined reference time to determine the operation state of the knob ring 304. When the knob ring 304 maintains the rotation state over the reference time, the operation of the knob ring 304 is determined as the holding operation, and when the knob ring 304 returns to its initial position after maintaining the rotation state below the reference time, the operation of the knob ring 304 is determined as the click operation.

The control unit 406 increases or decreases the cooking temperature or the cooking time set by the user according to the rotation direction and the operation state of the knob ring 304 by the preset adjustment unit. For example, when the knob ring 304 is clicked twice in the first direction, that is, in the counterclockwise direction, the control unit 406 decreases twice the cooking temperature or cooking time set by the user by the preset adjustment unit (for example, 1°F or 1 minute). As another example, when a state in which the knob ring 304 is held in the second direction, that is, in the clockwise direction is maintained, the control unit 406 continuously increases the cooking temperature or the cooking time set by the user in proportion to the time at which the knob ring 304 is held by the preset adjustment unit (for example, 1°F or 1 minute).

Whenever the user sets or changes the cooking temperature or the cooking time using the knob 302 or the knob ring 304, the control unit 406 displays the cooking temperature or the cooking time set or changed by the user through the display unit 306 provided on the outer peripheral surface of the knob ring 304. In one embodiment of the present disclosure, when the user sets the cooking temperature or the cooking time, the control unit 406 may output a preset setting notification audio through a audio output unit 410.

When the user completes the setting of the cooking temperature and/or the cooking time using the knob 302 or the knob ring 304, the control unit 406 controls the heating operation of a heating module 408 on the basis of the set cooking temperature and cooking time. That is, the control unit 406 controls the heating module 408 to supply the heat energy until the cooking temperature set by the user is reached. When an operation time of the heating module 408 reaches the cooking time set by the user, the control unit 406 ends the heating operation of the heating module 408.

Further, the control unit 406 may display information related to the operation state and the operation mode of the heating module 408 through the display unit 306 and output a audio related to the operation state and the operation mode of the heating module 408 through the audio output unit 410. For example, when the cooking time set by the user is reached and the heating operation of the heating module 408 is completed, the control unit 406 displays letters (for example, "End") indicating an end of the heating operation on the display unit 306 and outputs a audio notifying the end of the heating operation through the audio output unit 410. The user may intuitively recognize the operation state or the operation mode of the heating module 408 by such a notification operation.

When the heating module 408 is an induction heating module or an induction range, the control unit 406 may sense whether the heatable container is present on the heating areas 224 and 226 through the container sensing function. When it is determined that the container is not present on the heating areas 224 and 226 as a result of the container sensing, the control unit 406 may display a symbol indicating that the container is not present through the display unit 306, and output a audio indicating that the container is not present through the audio output unit 410.

Further, when the heating module 408 is the induction heating module or the induction range, the control unit 406 may control the power supply unit (not shown) to supply the power to the working coils 254 and 256 only when the heatable container is present on the heating areas 224 and 226 as a result of the container sensing, and otherwise, control the power supply unit (not shown) so that no power is supplied to the working coils 254 and 256 even when the user requests the start of the heating operation.

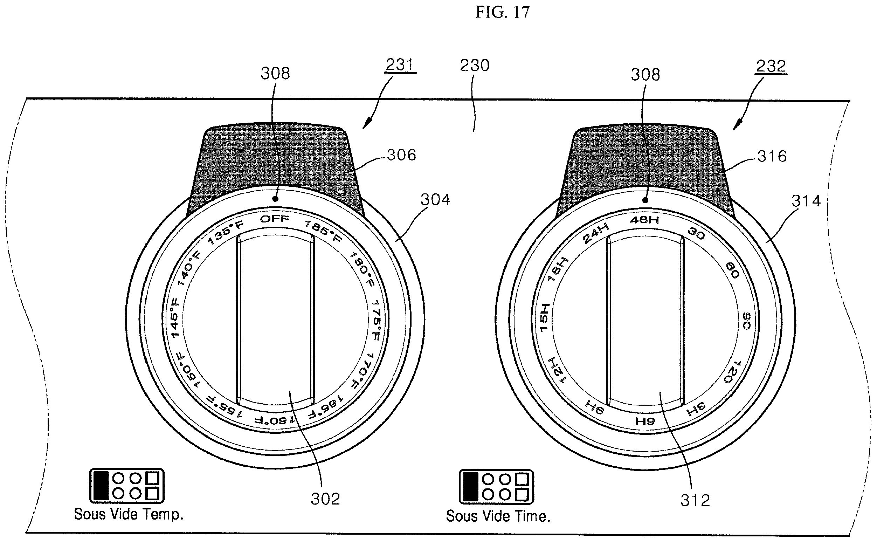

Hereinafter, a method of setting the cooking temperature and the cooking time of the low-temperature heating module 202 using the first knob module 231 and the second knob module 232 will be described with reference to FIGS. 17 to 21.

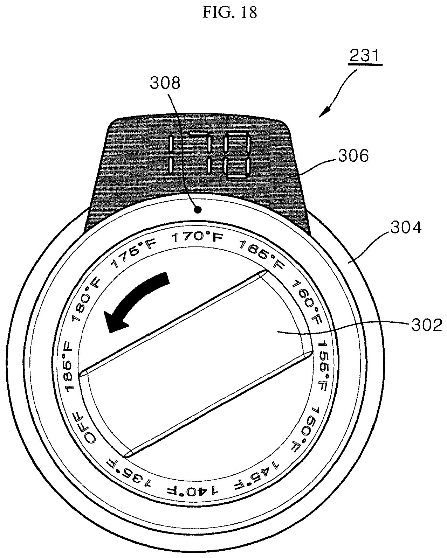

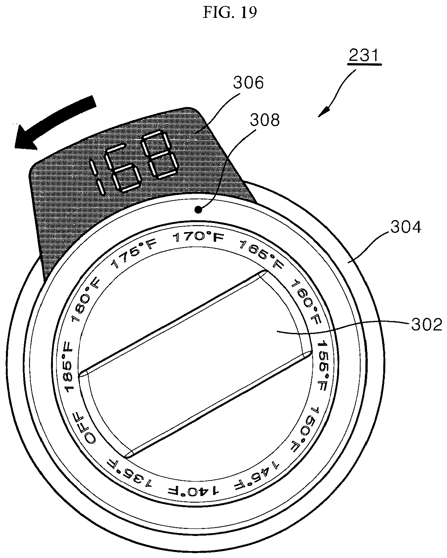

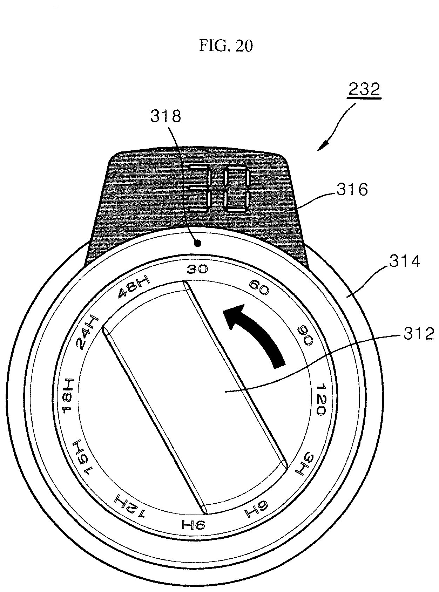

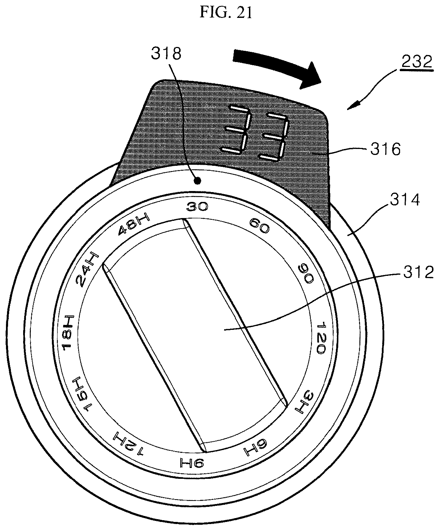

FIG. 17 illustrates a first knob module and a second knob module configured to control a heating operation of the low-temperature heating module included in the cooking device according to one embodiment of the present disclosure. Also, FIG. 18 illustrates a method of setting the default temperature using the first knob module in one embodiment of the present disclosure, and FIG. 19 illustrates a method of precisely adjusting the preset temperature using the first knob module in one embodiment of the present disclosure. Further, FIG. 20 illustrates a method of setting the default time using the second knob module in one embodiment of the present disclosure, and FIG. 21 illustrates a method of precisely adjusting the preset time using the second knob module in one embodiment of the present disclosure.

As shown in FIG. 17, the first knob module 231 configured to set the cooking temperature of the low-temperature heating module 202 and the second knob module 232 configured to set the cooking time of the low-temperature heating module 202 are disposed on the control panel 230.

The first knob module 231 includes the first knob 302 configured to set the cooking temperature to the default temperature, the first knob ring 304 configured to precisely adjust the set cooking temperature, and the first display unit 306 formed on the outer peripheral surface of the knob ring 304 and configured to display the cooking temperature set by the user.

The second knob module 232 includes a second knob 312 configured to set the cooking time as the default time, a second knob ring 314 configured to precisely adjust the set cooking time, and a second display unit 316 formed on an outer peripheral surface of the knob ring 314 and configured to display the cooking time set by the user.

A method of setting the cooking temperature of the low-temperature heating module 202 by the user using the first knob module 231 will be described below.

In a state in which the cooking temperature of the low-temperature heating module 202 is not set, the user first pushes the first knob 302 of the first knob module 231 and then rotates the first knob 302 by 120° in the first direction, that is, the counterclockwise direction as shown in FIG. 18. As the first knob 302 rotates, the temperature value "170°F" marked on the surface of the first knob 302 moves to the same position as the reference point 308. Accordingly, "170", which is the cooking temperature set by the user, is displayed on the first display unit 306.

In this manner, the user may set the default temperature value marked on the surface of the first knob 302 to the cooking temperature by rotating the first knob 302 so that the temperature value matching the cooking temperature to be set from the default temperature values marked on the surface of the first knob 302 matches with the reference point 308.

Further, the user may also use the first knob ring 304 of the first knob module 231 to adjust the cooking temperature more precisely. Whenever the user clicks or holds the first knob ring 304 in the first direction, the numeral displayed on the first display unit 306 decreases by the predetermined adjustment unit, for example, 1°F. Further, whenever the user clicks or holds the first knob ring 304 in the second direction, the numeral displayed on the first display unit 306 increases by the predetermined adjustment unit, that is, 1°F.

For example, in a state in which the cooking temperature of the low-temperature heating module 202 set to 170°F as shown in FIG. 18, the user clicks twice the first knob ring 304 in the first direction, that is, the counterclockwise direction as shown in FIG. 19. Accordingly, since the cooking temperature is reduced by 2, which is the number of clicks, "168" is displayed on the first display unit 306.

As another example, the user holds the first knob ring 304 in the second direction, that is, the clockwise direction, for 12 seconds in a state in which the cooking temperature of the low-temperature heating module 202 is set to 170°F as shown in FIG. 18. Accordingly, the cooking temperature is increased by 6 in correspondence with the holding time of 10 seconds, and "176" is displayed on the first display unit 306.

As described above, when the cooking temperature is not changed until the predetermined waiting time passes after the cooking temperature is set using the first knob 302 or the first knob ring 304, the control unit 406 determines the last set
temperature value as the cooking temperature of the low-temperature heating module 202.

Meanwhile, in a state in which the cooking temperature is not set, the user may rotate the first knob ring 304 earlier than the first knob 302. In this case, the preset initial temperature value (for example, "120°F") may be displayed on the first display unit 306. After the initial temperature value is displayed on the first display unit 306, the user may set or change the cooking temperature using the first knob 302 or the first knob ring 304 as described above.

Next, a method of setting the cooking time of the low-temperature heating module 202 by the user using the second knob module 232 will be described below.

In a state in which the cooking time of the low-temperature heating module 202 is not set, the user first pushes the second knob 312 of the second knob module 232 and then rotates the second knob 312 by 30° in the first direction, that is, the counterclockwise direction as shown in FIG. 20. As the second knob 312 rotates, the time value "30" (minutes) marked on a surface of the second knob 312 moves to the same position as the reference point 308. Accordingly, "30", which is the cooking time set by the user, is displayed on the second display unit 316. As another example, when the user pushes the second knob 312 of the second knob module 232 and then rotates the second knob 312 by 60° in the second direction, that is, the clockwise direction, "24H" (24 hours), which is the cooking time set by the user, is displayed on the second display unit 316.

In this manner, the user may set the default time value marked on the surface of the second knob 312 to the cooking time by rotating the second knob 312 so that the time value matching the cooking time to be set from the default time values marked on the surface of the second knob 312 matches with the reference point 308.

Further, the user may also use the second knob ring 314 of the second knob module 232 to adjust the cooking time more precisely. Whenever the user clicks or holds the second knob ring 314 in the first direction, the numeral displayed on the first display unit 306 decreases by the predetermined adjustment unit, for example, one minute or one hour. Further, whenever the user clicks or holds the first knob ring 304 in the second direction, the numeral displayed on the first display unit 306 increases by the predetermined adjustment unit, that is, one minute or one hour.

For example, in a state in which the cooking time of the low-temperature heating module 202 set to 30 minutes as shown in FIG. 20, the user clicks three times the second knob ring 314 in the second direction, that is, the clockwise direction as shown in FIG. 21. Accordingly, since the cooking temperature is increased by 3, which is the number of clicks, "33" (minutes) is displayed on the second display unit 316.

As another example, the user holds the first knob ring 304 in the first direction, that is, the counterclockwise direction, for 6 seconds in a state in which the cooking time of the low-temperature heating module 202 is set to 24H (24 hours). Accordingly, the cooking temperature is decreased by 3 (hours) in correspondence with the holding time of 6 seconds, and "21H" is displayed on the first display unit 306.

As described above, when the cooking time is not changed until the predetermined waiting time passes after the cooking time is set using the second knob 312 or the second knob ring 314, the control unit 406 determines the last set time value as the cooking time of the low-temperature heating module 202.

Meanwhile, in a state in which the cooking time of the low-temperature heating module 202 is not set, the user may rotate the second knob ring 314 earlier than the second knob 312. In this case, the preset initial time value (for example, 6H) may be displayed on the second display unit 316. After the initial time value is displayed on the second display unit 316, the user may set or change the cooking temperature using the second knob 312 or the second knob ring 314 as described above.

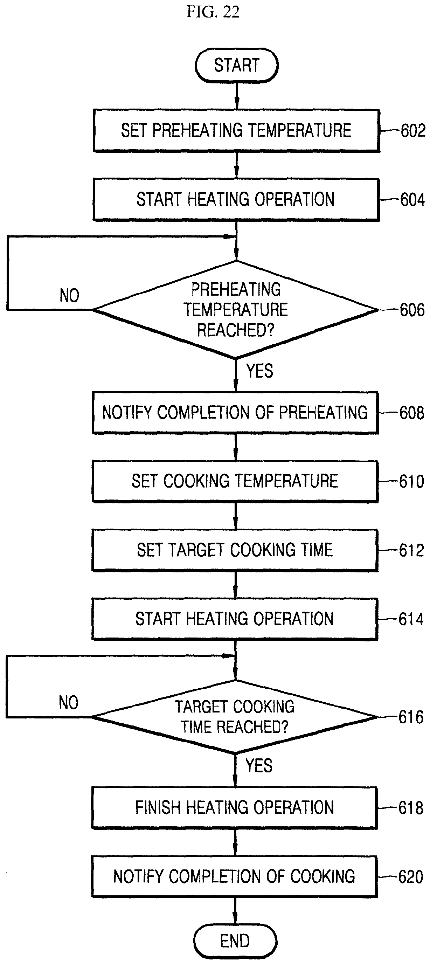

FIG. 22 is a flowchart illustrating operation processes of the cooking device according to one embodiment of the present disclosure. As a reference, in the embodiment of FIG. 22, the low-temperature cooking is performed by preheating the water container 206 using a preheating function of the low-temperature heating module 202 and putting the food into the water container 206 after the preheating is completed by the user.

In a state in which the low-temperature heating module 202 does not perform the heating operation after the power is applied to the cooking device 1, the user puts the water container 206 filled with the water into the accommodation space 204 of the low-temperature heating module 202 and closes the cover 210. At this time, the user does not put the food into the water container 206.

Next, the user operates the first knob 302 or the first knob ring 304 of the first knob module 231 to set the desired cooking temperature. The control unit 406 sets the cooking temperature set by the user to the preheating temperature (602), and controls the heating operation of the low-temperature heating module 202 to start according to the set preheating temperature (604).

Accordingly, the power is supplied to the heating device (for example, an electric heater) of the low-temperature heating module 202 to supply the heat energy to the water container 206. Letters (for example, "Pre") indicating that the low-temperature heating module 202 performs the preheating operation may be displayed on the first display unit 306 of the first knob module 231 while the low-temperature heating module 202 performs the heating operation.

The control unit 406 checks whether the temperature of the water container 206 measured by a temperature sensor installed in the low-temperature heating module 202 reaches the previously set preheating temperature (606). When a current temperature of the water container 206 has not reached the preheating temperature as a result of the check, the control unit 406 maintains the heating operation of the heating module 202.

Meanwhile, although not shown in the drawings, the user may operate the first knob module 231 to reset the preheating temperature while the heating operation for preheating is being performed. In this case, the control unit 406 compares the preheating temperature reset by the user with the current temperature of the water container 206.

As a result of the comparison, when the preheating temperature reset by the user is lower than the current temperature of the water container 206, the control unit 406 regards that the current temperature of the water container 206 has reached the preheating temperature reset by the user, in other words, the preheating is completed, and performs the preheating end notification operation (608).

As a result of the comparison, when the preheating temperature reset by the user is higher than the current temperature of the water container 206, the control unit maintains the heating operation of the low-temperature heating module 202 until the current temperature of the water container 206 reaches the preheating temperature reset by the user.

Meanwhile, as a result of confirmation in operation 606, when the current temperature of the water container 206 reaches the preheating temperature, the control unit 406 performs the preheating end notification operation (608). For example, the control unit 406 may display letters (for example, "Pre") displayed on the first display unit 306 or the previously set preheating temperature on the first display unit 306, or may cause the displayed letters or numeral to blink. As another example of the preheating end notification operation, the control unit 406 outputs a audio for informing that the preheating is completed through the audio output unit 410.

The control unit 406 may maintain the preheating end notification operation only for a preset notification time or may continuously perform the preheating end notification operation until the user operates the knob module or opens the cover 210.

The user, who recognizes that the preheating is completed, opens the cover 210, puts the food into the water container 206, and closes the cover 210. Then, the user sets the cooking temperature using the first knob module 231 (610) and sets a target cooking time using the second knob module 232 (612).

Depending on the embodiment, operation 610 in which the cooking temperature is set by the user is omitted and only the target cooking time may be set. In another embodiment, only operation 610 in which the cooking temperature is set is performed and operation 612 in which the target cooking time is set may not be performed. When the user does not set the target cooking time, the control unit 406 may set the target cooking time to the preset default time limit (for example, 12 hours).

When the setting of the cooking temperature and/or the target cooking time is completed, the control unit 406 controls so that the heating operation of the heating module 202 is started according to the set cooking temperature. Further, the measurement or countdown of the cooking time is started at the time when the heating operation of the heating module 202 is started. Thus, the cooking of the food by the low-temperature heating module 202 is started.

Here, the second display unit 316 may sequentially display a time at which the cooking has elapsed so as to increase from zero in a preset unit (for example, one minute or one hour), or display the time at which the cooking has elapsed in a countdown manner in which the time is decreased in the preset unit (for example, one minute or one hour) from the target cooking time set by the user.

The control unit 406 checks whether the time at which the low-temperature heating module 202 performed the heating operation while performing the heating operation, that is, the cooking time has reached the target cooking time set by the user (616).

As a result of the confirmation in operation 616, when the cooking time has not reached the target cooking time, the heating operation of the low-temperature heating module 202 is maintained.

When the cooking time reaches the target cooking time as a result of the confirmation in operation 616, the control unit 406 terminates the heating operation of the low-temperature heating module 202 (618).

Further, when the heating operation is completed, the control unit 406 performs the cooking end notification operation to notify that the cooking of the food by the heating operation of the low-temperature heating module 202 is completed (620).

For example, the control unit 406 may display letters (for example, "End") for indicating the completion of the cooking on the second display unit 316, or may cause the displayed letters or numeral to blink. As another example of the cooking end notification operation, the control unit 406 outputs a audio for informing that the cooking is completed through the audio output unit 410.

The cooking end notification operation may be performed only for a preset notification time or continuously performed until the user operates the knob module or opens the cover 210.

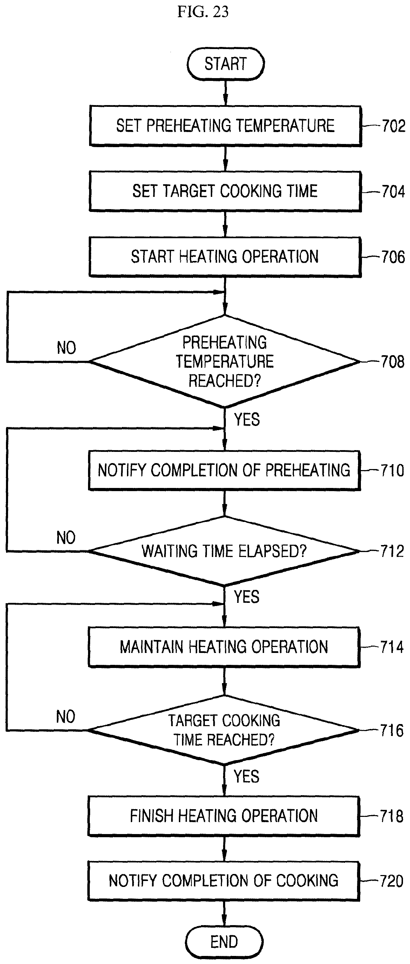

FIG. 23 is a flowchart illustrating operation processes of a cooking device according to another embodiment of the present disclosure. As a reference, in the embodiment shown in FIG. 23, a user does not use a preheating function but starts cooking while putting food into a water container 206 from the beginning.

In a state in which a low-temperature heating module 202 does not perform a heating operation after power is applied to a cooking device 1, the user puts a water container 206 containing water and food into an accommodation space 204 of the low-temperature heating module 202 and closes a cover 210.

Next, the user operates a first knob 302 or a first knob ring 304 of a first knob module 231 to set a desired cooking temperature. Further, the user operates a second knob 312 or a second knob ring 314 of a second knob module 232 to set a desired target cooking time.

A control unit 406 sets a cooking temperature set by the user to a preheating temperature (702), and controls the heating operation of the low-temperature heating module 202 to start according to a set preheating temperature (706). Accordingly, the power is supplied to a heating device (for example, an electric heater) of the low-temperature heating module 202 to supply heat energy to the water container 206.

Here, the control unit 406 starts the measurement or countdown of a cooking time from the time when a preheating operation is started. However, in another embodiment of the present disclosure, even when the user sets the target cooking time, the measurement or countdown of the cooking time may not be started at the time when the preheating operation is started, and the measurement or countdown of the cooking time may be started from the time when the waiting time is elapsed, which will be described below (see operation 712).

Letters (for example, "Pre") indicating that the low-temperature heating module 202 performs the preheating operation may be displayed on a first display unit 306 of the first knob module 231 while the low-temperature heating module 202 performs the heating operation.

The control unit 406 checks whether a temperature of the water container 206 measured by a temperature sensor installed in the low-temperature heating module 202 reaches the previously set preheating temperature (708). When a current temperature of the water container 206 does not reach the preheating temperature as a result of the check, the control unit 406 maintains the heating operation of the heating module 202.

Meanwhile, although not shown in the drawings, the user may operate the first knob module 231 to reset the preheating temperature while the heating operation for preheating is being performed. In this case, the control unit 406 compares the preheating temperature reset by the user with the current temperature of the water container 206.

As a result of the comparison, when the preheating temperature reset by the user is lower than the current temperature of the water container 206, the control unit 406 regards that the current temperature of the water container 206 has reached the preheating temperature reset by the user, in other words, the preheating is completed, and performs a preheating end notification operation (710).

As a result of the comparison, when the preheating temperature reset by the user is higher than the current temperature of the water container 206, the control unit maintains the heating operation of the low-temperature heating module 202 until the current temperature of the water container 206 reaches the preheating temperature reset by the user.

Meanwhile, as a result of confirmation in operation 708, when the current temperature of the water container 206 reaches the preheating temperature, the control unit 406 performs the preheating end notification operation (710). For example, the control unit 406 may display letters (for example, "Pre") displayed on the first display unit 306 or the previously set preheating temperature on the first display unit 306, or may cause the displayed letters or numeral to blink. As another example of the preheating end notification operation, the control unit 406 outputs a audio for informing that the preheating is completed through a audio output unit 410.

When the preheating is completed, the control unit 406 waits for the operation of the first knob module 231 or the second knob module 232 by the user for a preset waiting time. When the user changes the cooking temperature or the cooking time by operating the first knob module 231 or the second knob module 232 before the waiting time passes, the control unit 406 performs operations 610 through 620 of FIG. 22.

However, when the user does not operate the first knob module 231 or the second knob module 232 until the waiting time passes, the control unit 406 sets the previously set preheating temperature to the cooking temperature as it is, and sets a previously set target cooking time to the target cooking time as it is. The control unit 406 maintains the heating operation of the low-temperature heating module 202 as it is on the basis of the set cooking temperature and target cooking time (714).

As described above, the measurement or countdown of the cooking time may start at a time (operation 706) at which the preheating operation is started or at a time (operation 716) at which the waiting time has elapsed.

Here, the second display unit 316 may sequentially display a time at which the cooking has elapsed so as to increase in a preset unit (for example, one minute or one hour), or display the time at which the cooking has elapsed in a countdown manner in which the time is decreased in the preset unit (for example, one minute or one hour) from the target cooking time set by the user.

The control unit 406 checks whether the time at which the low-temperature heating module 202 performed the heating operation while performing the heating operation, that is, the cooking time has reached the target cooking time set by the user (716).

As a result of the confirmation in operation 716, when the cooking time has not reached the target cooking time, the heating operation of the low-temperature heating module 202 is maintained.

When the cooking time reaches the target cooking time as a result of the confirmation in operation 716, the control unit 406 terminates the heating operation of the low-temperature heating module 202 (718).

Further, when the heating operation is completed, the control unit 406 performs the cooking end notification operation to notify that the cooking of the food by the heating operation of the low-temperature heating module 202 is completed (720).

For example, the control unit 406 may display letters (for example, "End") for indicating the completion of the cooking to the second display unit 316 on the second display unit 316, or may cause the displayed letters or numeral to blink. As another example of the cooking end notification operation, the control unit 406 outputs a audio for informing that the cooking is completed through the audio output unit 410.

The cooking end notification operation may be performed only for a preset notification time or may be continuously performed until the user operates the knob module or opens the cover 210.

As described above, the cooking device according to the present disclosure includes the knob which operates in a push-and-turn manner and the knob ring which operates in a click or hold manner. The user may easily and precisely set the amount of the heat energy supplied by the heating module provided in the cooking device and the cooking time using the knob or the knob ring.

Further, since the user may operate the knob or the knob ring while confirming information displayed on the display unit in real time, the amount of the heat energy supplied by the heating module and the cooking time may be set more easily and accurately.

Further, various information related to the cooking may be quickly and conveniently confirmed through the display unit even in the process of being cooked by the cooking device.

A cooking device according to the present disclosure has an advantage in that an amount of heat energy supplied through the cooking device and a cooking time of the food can be accurately and precisely adjusted.

Further, a cooking device according to the present disclosure has an advantage in that a user can easily and accurately grip an amount of heat energy supplied from the cooking device and a remaining cooking time during a cooking process.

Further, a cooking device according to the present disclosure has an advantage in that a user can more conveniently and accurately control cooking processes and immediately confirm information required for cooking.

## Claims

1. A cooking device (1) comprising a heating module (202) configured to supply heat energy for cooking food, a first knob module (231) configured to set a cooking temperature of the food and a second knob module (232) configured to set a target cooking time of the food,
**characterized in that** the first knob module (231) includes:
a first knob (302) to which a plurality of default temperatures is assigned, the first knob (302) rotating in a first direction or a second direction, corresponding to each rotational position, and being setting to have preset intervals;
a first knob ring (304) which returns to an initial position thereof after being moved in the first or second direction and increases or decreases the default temperature set by the first knob (302) by a preset adjustment unit; and
a first display unit (306) which is formed at one side of the first knob ring (304) and displays the cooking temperature, and
wherein the second knob module (232) includes:
a second knob (312) which rotates in the first or second direction and to which a default time corresponding to each rotational position is assigned;
a second knob ring (314) which returns to an initial position thereof after being moved in the first or second direction and increases or decreases the default time set by the first knob (302) by a preset adjustment unit; and
a second display unit which is formed at one side of the second knob ring (314) and displays the cooking time.

2. The cooking device (1) of claim 1, **characterized in that** when a user performs a click operation using the first knob ring (304) or the second knob ring (314), the default temperature or the default time is increased or decreased by the number of the click operation

3. The cooking device (1) of claim 1 or 2, **characterized in that** when a user performs a holding operation using the first knob ring (304) or the second knob ring (314), the default temperature or the default time is increased or decreased for a duration time of the holding operation.

4. The cooking device (1) of claims 1, 2, or 3, **characterized in that** when a user sets a preheating temperature using the first knob module (231) in a state in which a heating operation of the heating module (202) is not started, the heating operation of the heating module (202) is performed until a temperature of the heating module (202) reaches the preheating temperature.

5. The cooking device (1) of claim 4, **characterized in that** when the temperature of the heating module (202) reaches the preheating temperature, a preheating end notification operation using at least one of the first display unit (306) and a audio output unit is performed.

6. The cooking device (1) of claim 4 or 5, **characterized in that** when the user sets the cooking temperature using the first knob module (231) after the temperature of the heating module (202) reaches the preheating temperature, a heating operation of the heating module (202) is performed until the cooking time of the heating module (202) reaches a preset target cooking time.

7. The cooking device (1) of claim 6, **characterized in that** when the cooking time of the heating module (202) reaches the target cooking time, a cooking end notification operation using at least one of the first display unit (306) and the audio output unit is performed.

8. The cooking device (1) of any one of claims 4 to 7, **characterized in that** when the user does not set the cooking temperature until a preset waiting time passes after the temperature of the heating module (202) reaches the preheating temperature, the heating operation of the heating module (202) is maintained on the basis of the preheating temperature until the cooking time of the heating module (202) reaches the preset target cooking time.

9. The cooking device (1) of any one of claims 1 to 8, **characterized in that** when a user does not set the target cooking time using the second knob module (232), the target cooking time is set to a preset default time limit.

10. The cooking device (1) of any one of claims 4 to 9, **characterized in that** when the user sets the preheating temperature lower than a current temperature of the heating module (202) before the temperature of the heating module (202) reaches the preheating temperature, the temperature of the heating module (202) is regarded to have reached the preheating temperature.

11. The cooking device (1) of any one of claims 1 to 10, **characterized in that** the cooking time of the heating module (202) is measured on the basis of a preheating start time or a cooking start time.

## Patentansprüche

1. Garvorrichtung (1) mit einem Erwärmungsmodul (202), das so konfiguriert ist, dass es Wärmeenergie zum Garen von Lebensmitteln zuführt, einem ersten Knopfmodul (231), das so konfiguriert ist, dass es eine Gartemperatur der Lebensmittel einstellt, und einem zweiten Knopfmodul (232), das so konfiguriert ist, dass es eine Sollgarzeit der Lebensmittel einstellt,
**dadurch gekennzeichnet, dass** das erste Knopfmodul (231) aufweist:
einen ersten Knopf (302), dem mehrere Standardtemperaturen zugewiesen sind, wobei der erste Knopf (302) in einer ersten Richtung oder einer zweiten Richtung dreht, die jeder Drehposition entspricht und eine solche Einstellung ist, dass sie voreingestellte Intervalle hat;
einen ersten Knopfring (304), der in eine Anfangsposition davon zurückkehrt, nachdem er in der ersten oder zweiten Richtung bewegt wird, und die durch den ersten Knopf (302) eingestellte Standardtemperatur um eine voreingestellte Einstelleinheit erhöht oder verringert; und
eine erste Anzeigeeinheit (306), die an einer Seite des ersten Knopfrings (304) gebildet ist und die Gartemperatur anzeigt, und
wobei das zweite Knopfmodul (232) aufweist:
einen zweiten Knopf (312), der in der ersten oder zweiten Richtung dreht und dem eine Standardzeit zugewiesen ist, die jeder Drehposition entspricht;
einen zweiten Knopfring (314), der in eine Anfangsposition davon zurückkehrt, nachdem er in der ersten oder zweiten Richtung bewegt wird, und die durch den ersten Knopf (302) eingestellte Standardzeit um eine voreingestellte Einstelleinheit erhöht oder verringert; und
eine zweite Anzeigeeinheit, die an einer Seite des zweiten Knopfrings (314) gebildet ist und die Garzeit anzeigt.

2. Garvorrichtung (1) nach Anspruch 1, **dadurch gekennzeichnet, dass** bei Durchführung eines Klickvorgangs durch einen Benutzer mit Hilfe des ersten Knopfrings (304) oder des zweiten Knopfrings (314) die Standardtemperatur oder die Standardzeit durch die Klickvorganganzahl erhöht oder verringert wird.

3. Garvorrichtung (1) nach Anspruch 1 oder 2, **dadurch gekennzeichnet, dass** bei Durchführung eines Haltevorgangs durch einen Benutzer mit Hilfe des ersten Knopfrings (304) oder des zweiten Knopfrings (314) die Standardtemperatur oder die Standardzeit für eine Dauer des Haltevorgangs erhöht oder verringert wird.

4. Garvorrichtung (1) nach Anspruch 1, 2 oder 3, **dadurch gekennzeichnet, dass** bei Einstellung einer Vorwärmzeit durch einen Benutzer mit Hilfe des ersten Knopfmoduls (231) in einem Zustand, in dem ein Erwärmungsvorgang des Erwärmungsmoduls (202) nicht gestartet ist, der Erwärmungsvorgang des Erwärmungsmoduls (202) durchgeführt wird, bis eine Temperatur des Erwärmungsmoduls (202) die Vorwärmtemperatur erreicht.

5. Garvorrichtung (1) nach Anspruch 4, **dadurch gekennzeichnet, dass** bei Erreichen der Vorwärmtemperatur durch die Temperatur des Erwärmungsmoduls (202) ein Vorwärmende-Meldevorgang mit Hilfe der ersten Anzeigeeinheit (306) und/oder einer akustischen Ausgabeeinheit durchgeführt wird.

6. Garvorrichtung (1) nach Anspruch 4 oder 5, **dadurch gekennzeichnet, dass** bei Einstellung der Gartemperatur durch den Benutzer mit Hilfe des ersten Knopfmoduls (231), nachdem die Temperatur des Erwärmungsmoduls (202) die Vorwärmtemperatur erreicht, ein Erwärmungsvorgang des Erwärmungsmoduls (202) durchgeführt wird, bis die Garzeit des Erwärmungsmoduls (202) eine voreingestellte Sollgarzeit erreicht.

7. Garvorrichtung (1) nach Anspruch 6, **dadurch gekennzeichnet, dass** bei Erreichen der Sollgarzeit durch die Garzeit des Erwärmungsmoduls (202) ein Garende-Meldevorgang mit Hilfe der ersten Anzeigeeinheit (306) und/oder der akustischen Ausgabeeinheit durchgeführt wird.

8. Garvorrichtung (1) nach einem der Ansprüche 4 bis 7, **dadurch gekennzeichnet, dass** bei nicht erfolgender Einstellung der Gartemperatur durch den Benutzer, bis eine voreingestellte Wartezeit vergeht, nachdem die Temperatur des Erwärmungsmoduls (202) die Vorwärmtemperatur erreicht, der Erwärmungsvorgang des Erwärmungsmoduls (202) auf der Grundlage der Vorwärmtemperatur beibehalten wird, bis die Garzeit des Erwärmungsmoduls (202) die voreingestellte Sollgarzeit erreicht.

9. Garvorrichtung (1) nach einem der Ansprüche 1 bis 8, **dadurch gekennzeichnet, dass** bei nicht erfolgender Einstellung der Sollgarzeit durch einen Benutzer mit Hilfe des zweiten Knopfmoduls (232) die Sollgarzeit auf ein voreingestelltes Standardzeitlimit eingestellt wird.

10. Garvorrichtung (1) nach einem der Ansprüche 4 bis 9, **dadurch gekennzeichnet, dass** bei niedrigerer Einstellung der Vorwärmtemperatur als eine aktuelle Temperatur des Erwärmungsmoduls (202) durch den Benutzer, bevor die Temperatur des Erwärmungsmoduls (202) die Vorwärmtemperatur erreicht, die Temperatur des Erwärmungsmoduls (202) so behandelt wird, als hätte sie die Vorwärmtemperatur erreicht.

11. Garvorrichtung (1) nach einem der Ansprüche 1 bis 10, **dadurch gekennzeichnet, dass** die Garzeit des Erwärmungsmoduls (202) auf der Grundlage einer Vorwärmstartzeit oder einer Garstartzeit gemessen wird.

## Revendications

1. Dispositif de cuisson (1) comprenant un module de chauffage (202) configuré pour fournir de l'énergie thermique pour cuire un aliment, un premier module de bouton (231) configuré pour définir une température de cuisson de l'aliment et un second module de bouton (232) configuré pour déterminer une durée de cuisson cible de l'aliment,
**caractérisé en ce que** le premier module de bouton (231) inclut :
un premier bouton (302) auquel une pluralité de températures par défaut sont attribuées, le premier bouton (302) tournant dans une première direction ou une seconde direction, correspondant à chaque position de rotation, et étant conçu pour avoir des intervalles prédéfinis ;
une première bague de bouton (304) qui retourne à sa position initiale après avoir été déplacée dans la première ou la seconde direction et augmente ou diminue la température par défaut définie par le premier bouton (302) d'une unité de réglage prédéfinie ; et
une première unité d'affichage (306) qui est agencée sur un côté de la première bague de bouton (304) et affiche la température de cuisson, et
dans lequel le second module de bouton (232) inclut :
un second bouton (312) qui tourne dans la première ou la seconde direction et auquel une durée par défaut correspondant à chaque position de rotation est attribuée ;
une seconde bague de bouton (314) qui retourne à sa position initiale après avoir été déplacée dans la première ou la seconde direction et augmente ou diminue la durée par défaut définie par le premier bouton (302) d'une unité de réglage prédéfinie ; et une seconde unité d'affichage qui est agencée sur un côté de la seconde bague de bouton (314) et affiche la durée de cuisson.

2. Dispositif de cuisson (1) selon la revendication 1, **caractérisé en ce que** lorsqu'un utilisateur effectue une opération de clic en utilisant la première bague de bouton (304) ou la seconde bague de bouton (314), la température par défaut ou la durée par défaut est augmentée ou diminuée par le nombre d'opérations de clic.

3. Dispositif de cuisson (1) selon la revendication 1 ou 2, **caractérisé en ce que** lorsqu'un utilisateur effectue une opération de maintien en utilisant la première bague de bouton (304) ou la seconde bague de bouton (314), la température par défaut ou la durée par défaut est augmentée ou diminuée pendant une durée de l'opération de maintien.

4. Dispositif de cuisson (1) selon les revendications 1, 2 ou 3, **caractérisé en ce que** lorsqu'un utilisateur définit une température de préchauffage en utilisant le premier module de bouton (231) dans un état dans lequel une opération de chauffage du module de chauffage (202) n'est pas démarrée, l'opération de chauffage du module de chauffage (202) est effectuée jusqu'à ce qu'une température du module de chauffage (202) atteigne la température de préchauffage.

5. Dispositif de cuisson (1) selon la revendication 4, **caractérisé en ce que** lorsque la température du module de chauffage (202) atteint la température de préchauffage, une opération de notification de fin du préchauffage utilisant au moins l'une de la première unité d'affichage (306) et d'une unité de sortie audio est effectuée.

6. Dispositif de cuisson (1) selon la revendication 4 ou 5, **caractérisé en ce que** lorsqu'un utilisateur définit la température de cuisson en utilisant le premier module de bouton (231) après que la température du module de chauffage (202) a atteint la température de préchauffage, une opération de chauffage du module de chauffage (202) est effectuée jusqu'à ce que la durée de cuisson du module de chauffage (202) atteigne une durée de cuisson cible prédéfinie.

7. Dispositif de cuisson (1) selon la revendication 6, **caractérisé en ce que** lorsque la durée de cuisson du module de chauffage (202) atteint la durée de cuisson cible, une opération de notification de fin de cuisson utilisant au moins l'une de la première unité d'affichage (306) et d'une unité de sortie audio est effectuée.

8. Dispositif de cuisson (1) selon l'une quelconque des revendications 4 à 7, **caractérisé en ce que** lorsqu'un utilisateur ne définit pas la température de cuisson tant qu'une durée d'attente prédéfinie ne s'est pas écoulée après que la température du module de chauffage (202) a atteint la température de préchauffage, l'opération de chauffage du module de chauffage (202) est maintenue sur la base de la température de préchauffage jusqu'à ce que la durée de cuisson du module de chauffage (202) atteigne la durée de cuisson cible prédéfinie.

9. Dispositif de cuisson (1) selon l'une quelconque des revendications 1 à 8, **caractérisé en ce que** lorsqu'un utilisateur ne définit pas la durée de cuisson cible en utilisant le second module de bouton (232), la durée de cuisson cible est fixée à une durée limite par défaut prédéfinie.

10. Dispositif de cuisson (1) selon l'une quelconque des revendications 4 à 9, **caractérisé en ce que** lorsque l'utilisateur définit la température de préchauffage en dessous d'une température courante du module de chauffage (202) avant que la température du module de chauffage (202) atteigne la température de préchauffage, la température du module de chauffage (202) est considérée comme ayant atteint la température de préchauffage.

11. Dispositif de cuisson (1) selon l'une quelconque des revendications 1 à 10, **caractérisé en ce que** la durée de cuisson du module de chauffage (202) est mesurée sur la base d'un moment de début de préchauffage ou d'un moment de début de cuisson.
